# EUROPÄISCHE PATENTSCHRIFT

(11) **EP 3 558 066 B1**
(45) Veröffentlichungstag und Bekanntmachung des Hinweises auf die Patenterteilung: **25.10.2023**
(21) Anmeldenummer: 17823096.7
(22) Anmeldetag: 19.12.2017
(51) Int. Cl.: A47F 10/02, G01G 19/414, G06Q 10/08

(54) **EINRICHTUNG UMFASSEND EIN FLACHELEMENT ZUM AUFLEGEN AUF EIN ABLAGEELEMENT EINES WARENREGALS UND SYSTEM UND WARENPRÄSENTATIONSSYSTEM MIT EINER DERARTIGEN EINRICHTUNG**
DEVICE COMPRISING A FLAT ELEMENT FOR LAYING ONTO A SHELF ELEMENT OF A GOODS RACK AND SYSTEM AND GOODS PRESENTATION SYSTEM HAVING SUCH A DEVICE
DISPOSITIF COMPRENANT UN ÉLÉMENT DE SURFACE DESTINÉ À ÊTRE POSÉ SUR UN ÉLÉMENT DE RANGEMENT D'UN RAYONNAGE À MARCHANDISES ET SYSTÈME ET SYSTÈME DE PRÉSENTATION DE MARCHANDISES ÉQUIPÉ D'UN DISPOSITIF DE CE TYPE

(30) Priorität: 20.12.2016 DE 102016124951
(43) Veröffentlichungstag der Anmeldung: 30.10.2019
(73) Patentinhaber: REHAU Industries SE & Co. KG, 95111 Rehau (DE)
(72) Erfinder: BÜHLMEYER, Christian, 1120 Wien (AT); EIBL, Stefan, 95028 Hof (DE); GOLDSTEIN, Jörg, 95028 Hof (DE); MICHELS, Peter, 95028 Hof (DE); NIEHOFF, Ansgar, 95111 Rehau (DE); PARDOS, Santiago, 95100 Selb (DE); SCHMIDT, Steven, 95182 Döhlau (DE)
(86) Internationale Anmeldenummer: PCT/EP2017/083565
(87) Internationale Veröffentlichungsnummer: WO 2018/114962

(56) Entgegenhaltungen:
- WO-A1-2005/033645
- WO-A1-2016/205629
- US-A1- 2010 103 672
- US-A1- 2014 201 041
- Panasonic: "NRF Big Show 2015 Panasonic Introduces Intelligent Retail Shelving Solution at NRF 2015 Powershelf Combines Live on Shelf Inventory Awareness, Mobile Phone Advertising, Dynamic Price Adjustments and More to Improve Profitability and Customer Satisfaction", , 11. Januar 2015 (2015-01-11), Seiten 1-4, XP055458103, Gefunden im Internet: URL:https://www.businesswire.com/news/home /20150111005029/en/Panasonic-Introduces-In telligent-Retail-Shelving-Solution-NRF [gefunden am 2018-03-09] & Powershelf: "Powershelf | Power at the Shelf", , 2. Februar 2015 (2015-02-02), Seiten 1-13, XP055458107, Gefunden im Internet: URL:http://powershelf.net/wordpress/ [gefunden am 2018-03-09]

## Beschreibung

Die vorliegende Erfindung betrifft ein System umfassend wenigstens eine Einrichtung, wenigstens eine Ablagevorrichtung für ein Warenregal und ein Bestromungssystem zur Bestromung mehrerer elektronischer Anzeigeeinrichtungen zur Anzeige von warenbezogenen Informationen, wobei die Einrichtung mit einem Flachelement aus einem Kunststoffmaterial und mit einer Signalisierungseinrichtung ausgestaltet ist.

Bekannte Warenerfassungssysteme sind z.B. aus den folgenden Internetquellen bekannt:
Panasonic: "NRF Big Show 2015 Panasonic Introduces Intelligent Retail Shelving Solution at NRF 2015 Powershelf Combines Live on Shelf Inventory Awareness, Mobile Phone Advertising, Dynamic Price Adjustments and More to Improve Profitability and Customer Satisfaction",
, 11. Januar 2015 (2015-01-11), Seiten 1-4, XP055458103, Gefunden im Internet:
   URL:https://www.businesswire.com/news/home/ 20150111005029/en/Panasonic-Introduces-Intelligent-Retail-Shelving-Solution-NRF
   [gefunden am 2018-03-09] ; & Powersheif: "Powershelf | Power
   at the Shelf",
   2. Februar 2015 (2015-02-02), Seiten 1-13, XP055458107, Gefunden im Internet:
      URL:http://powershelf.net/wordpress/
      [gefunden am 2018-03-09]

Aus der US 2014/0201041 A ist ein Gewichts-Erfassungssystem für Einzelhandel-Regale bekannt. Aus der WO 2005/033645 A1 ist unter anderem ein Erfassungssystem für Gegenstände bekannt. Aus der WO 2016/205629 A1 sind eine Lagermanagement-Vorrichtung, ein Lagermanagement-System und ein Lagermanagement-Verfahren bekannt. Aus der US 2010/103672 A1 ist ein langgestreckter Beleuchtungskörper mit Leuchtdioden bekannt.

Im Einzelhandel, insbesondere in Supermärkten und Drogeriemärkten, ist der Einsatz von elektronischen bzw. computerbasierten Warenerfassungssystemen gängige Praxis. Warenerfassungssysteme verarbeiten als eine wesentliche Eingangsgröße insbesondere den bestehenden Warenbestand, welcher in der Regel - z.B. im Rahmen einer Inventur- technisch sehr aufwendig und auch meist sehr personalintensiv durch Erfassen der auf den Ablagevorrichtungen bzw. Regalböden der Warenregale angeordneten bzw. abgelegten Waren ermittelt werden muss. Ein zu unterschiedlichen Zeitpunkten ermittelter Warenbestand ist auch eine wesentliche Eingangsgröße zur Ermittlung des warenbezogenen Kaufverhaltens der potentiellen Käufer bzw. Kunden. Konkret kann so z.B. festgestellt werden, inwieweit sich die Nachfrage für eine bestimme Ware mit der Zeit ändert. Allerdings ist auch die Ermittlung des Kaufverhaltens insbesondere infolge der hierfür erforderlichen personalintensiven und technisch sehr aufwendigen Ermittlung des Warenbestands sehr personalintensiv und technisch sehr aufwendig.

Der vorliegenden Erfindung liegt daher die Aufgabe zugrunde, ein System mit einer Einrichtung anzugeben, das dazu beitragen kann, den Aufwand zur Ermittlung eines warenbezogenen Kaufverhaltens deutlich zu reduzieren.

Diese Aufgabe wird erfindungsgemäß mit einem nachfolgend beschriebenen System gelöst.

Die Einrichtung des erfindungsgemäßen Systems umfasst ein Flachelement beispielsweise aus einem Kunststoffmaterial zum Anordnen bzw. Ablegen auf einer Ablagefläche eines Ablageelements für ein Warenregal bzw. eines Warenregals und wenigstens eine elektrische Signalisierungseinrichtung bzw. Signalisisierungseinrichtung zum Signalisieren einer Gewichtsbelastung wenigstens eines Bereichs des Flachelements durch wenigstens eine auf dem Flachelement angeordnete bzw. abgelegte Ware bzw. durch wenigstens eine auf einer Flachseite des Flachelement angeordneten bzw. abgelegen Ware. Bei der elektrischen Signalisierungseinrichtung bzw. bei der Signalisisierungseinrichtung, die zum Signalisieren einer Gewichtsbelastung wenigstens eines Bereichs des Flachelements durch wenigstens eine auf dem Flachelement angeordnete bzw. abgelegte Ware vorgesehen ist, handelt es sich also um eine elektrische Signalisierungseinrichtung bzw. um eine Signalisisierungseinrichtung zum Signalisieren einer Gewichtsbelastung wenigstens eines Bereichs des Flachelements durch wenigstens eine auf dem Flachelement angeordnete Ware bzw. zum Signalisieren einer auf wenigstens einen Bereichs des Flachelements durch wenigstens eine auf dem Flachelement angeordnete Ware übertragene Gewichtskraft.

Das Flachelement ist hierbei unter Ausbildung wenigstens eines flächigen Kontakts einer der beiden Flachseiten des Flachelements zur der Ablagefläche auf dieser anordenbar bzw. ablegbar. Als Flachelement weist es eine Dicke bzw. Dickenerstreckung auf, die kleiner bzw. wesentlich kleiner ausgebildet ist als die Länge oder die Breite des Flachelements.

Die Einrichtung kann dazu beitragen, den Aufwand zur Ermittlung eines warenbezogenen Kaufverhaltens deutlich zu reduzieren. So kann die Einrichtung derart für die Ermittlung des Kaufverhaltens verwendet werden bzw. zu dieser beitragen, in dem das Flachelement auf einer Ablagefläche eines Ablageelements eines Warenregals des jeweiligen Verkaufsraums (wie z.B. einem Verkaufsraum eines Supermarkts oder Drogeriemarkts) angeordnet bzw. abgelegt wird und anschließend eine oder mehrere zum Verkauf anzubietende Waren auf dem Fachelement abgelegt bzw. angeordnet werden. Die mit der Ablage bzw. Anordnung einhergehende Gewichtsbelastung des Flachelements wird - sofern die Ware bzw. Waren auf einem Bereich abgelegt wurde bzw. wurden, bei dem die Signalisierungseinrichtung eine Gewichtsbelastung durch die Ware bzw. Waren signalisieren kann - von der Signalisierungseinrichtung signalisiert, wobei die Signalisierung einer bestehenden Gewichtsbelastung besonders bevorzugt durch ein von der Signalisierungseinrichtung ausgegebenes Signal bzw. elektrisches Signal erfolgt, das also über die Gewichtsbelastung informiert. Typischerweise könnte dieses Signal ein von einer Signalerzeugungseinrichtung der Signalisierungseinrichtung erzeugtes bzw. erzeugbares Signal sein oder ein von einem Signalgeber der Signalisierungseinrichtung erzeugtes bzw. erzeugbares Signal sein. Dieses Signal bzw. elektrische Signal könnte besonders praktisch z.B. in Form eines Rechtecksignals ausgebildet sein. Es versteht sich, dass es sich bei dem Signal insbesondere auch um ein durch Analog/Digital-Wandlung erzeugtes digitales Signal handeln kann, welches sich vorteilhaft mittels eines Computers bzw. einer Datenverarbeitungseinrichtung eines Warenerfassungssystems z.B. des Supermarkts oder z.B. des Drogeriemarkts weiter verarbeiten lässt. Die Dauer bzw. Dauern des bzw. der Zeitabschnitte eines vorgegebenen Zeitraums, bei dem bzw. denen ein die Gewichtsbelastung kennzeichnendes Signal auftritt bzw. vorliegt können in Verbindung mit der Dauer bzw. den Dauern des Zeitabschnitts bzw. der Zeitabschnitte des vorgegebenen Zeitraums, bei denen dieses Signal ausbleibt, vorteilhaft als Information bzw. verwertbare Information für die Ermittlung des warenbezogenen Kaufverhaltens herangezogen werden. Insbesondere können die Dauern dieser Zeitabschnitte - nach einer ggf. erforderlichen Digitalisierung der Dauern - vorteilhaft insbesondere für eine computerbasierte Ermittlung des warenbezogenen Kaufverhaltens mittels dem Fachmann geläufiger Verfahren bzw. Methoden verwendet werden. Die Verwertbarkeit dieser Zeitabschnitte für das Kaufverhalten ergibt sich z.B. aus dem Umstand, dass bei den Zeitabschnitten mit dem die Gewichtsbelastung kennzeichnenden Signal bzw. Signalen sich die Ware bzw. die Waren auf dem Flachelement befindet bzw. befinden und bei den Zeitabschnitten, bei denen das die Gewichtsbelastung kennzeichnende Signal ausbleibt, keine Ware auf dem Flachelement mehr vorhanden ist, weil sie z.B. vom Kunden weggenommen wurde.

Es versteht sich, dass die Signalisisierungseinrichtung nicht dazu eingerichtet sein muss, den Wert bzw. genauen Wert der jeweiligen Gewichtsbelastung zu messen. Es ist lediglich erforderlich, dass die Signalisisierungseinrichtung feststellt, dass eine Gewichtsbelastung vorliegt, was typischerweise z.B. bei Messung einer eine Belastungsschwelle überschreitenden Belastung mittels eines Gewichtskraftmesseinrichtung der Signalisierungseinrichtung der Fall ist.

Insgesamt betrachtet kann die Verwendung der erfindungsgemäßen Einrichtung bzw. die Verwendung einer Mehrzahl der erfindungsgemäßen Einrichtungen dazu beitragen, den Aufwand zur Ermittlung eines warenbezogenen Kaufverhaltens gegenüber den bekannten Lösungen deutlich zu reduzieren, da über die ermöglichte Signalisierung der Gewichtsbelastung des Flachelements durch die Ware bzw. Waren ohne großen Personalaufwand und auch ohne großen technischen Aufwand insbesondere eine computergestützte Ermittlung des warenbezogenen Kaufverhaltens möglich ist. Beispielsweise kann aus dem Signalisieren einer Gewichtsbelastung durch das die Gewichtsbelastung kennzeichnende Signal und einem anschließenden Ausbleiben des die Gewichtsbelastung kennzeichnenden Signals für mehr als eine Minute mit hoher Wahrscheinlichkeit darauf geschlossen werden, dass die Ware von dem Kunden auch gekauft werden will. Tritt das die Gewichtsbelastung kennzeichnende Signal schon früher wieder auf, kann mit hoher Wahrscheinlichkeit darauf geschlossen werden, dass die Ware von dem Kunden zurückgestellt wurde und kein Kaufinteresse besteht.

Aufgrund des oben Dargelegten versteht es sich auch, dass die Einrichtung insbesondere auch vorteilhaft für die Ermittlung des Warenbestands der auf dem Flachelement abgelegten Ware bzw. Waren verwendet werden kann, und zwar kann der Warenbestand gegenüber den bekannten Lösungen aufgrund des oben Dargelegten gegenüber den bekannten Lösungen mit einem deutlich geringeren Aufwand bewerkstelligt werden, insbesondere kann mittels der erfindungsgemäßen Einrichtung für die Warenbestandsermittlung erforderliches Personal eingespart werden. Insofern löst die Einrichtung auch die Aufgabe, den Aufwand zur Ermittlung eines Warenbestands eines Warenregals deutlich zu reduzieren. Insbesondere betrifft die Erfindung daher auch die Verwendung der Einrichtung für die Ermittlung eines Warenbestands eines Warenregals.

Vorteilafterweise kann die Einrichtung insbesondere auch eine Mehrzahl von Signalisierungseinrichtungen aufweisen, wobei jede der Signalisierungseinrichtungen vorzugsweise eine Gewichtsbelastung eines ihr zugeordneten Bereichs des Flachelements durch wenigstens eine Ware signalisiert bzw. signalisieren kann. Auf diese Weise kann für das jeweilige Ablageelement das Kaufverhalten bzw. der Warenbestand für eine Vielzahl von auf dem jeweiligen Ablageelement abgelegten Waren überwacht werden. Besonders praktisch können, sofern die Signalisierungseinrichtungen zur Ausgabe von Signalen eingerichtet sind, die von den jeweiligen Signalisierungseinrichtungen ausgegebenen bzw. erzeugten Signale nach einer ggf. erforderlichen Analog/Digital-Wandlung über einen Computer verarbeitet werden, der auf der Grundlage der an ihn übertragenen Signale bzw. Daten den Warenbestand bzw. das Kaufverhalten in dem Fachmann geläufiger Weise über eine an den Computer angeschlossene Anzeigeeinrichtung, wie z.B. einen großen zentralen Bildschirm in einem Managementraum eines Kaufhauses, darstellt bzw. veranschaulicht.

Besonders praktisch kann die Signalisierungseinrichtung bzw. die jeweilige Signalisierungseinrichtung eine Meldeeinrichtung aufweisen und dazu eingerichtet sein, bei Vorliegen oder Nicht-Vorliegen einer bestehenden Gewichtsbelastung des Flachelements durch wenigstens eine Ware die Meldeeinrichtung zwecks Meldung der Gewichtsbelastung oder der nicht vorliegenden Gewichtsbelastung anzusteuern. Die Meldung könnte z.B. durch Erleuchtung eines Leuchtmittels der Meldeeinrichtung realisiert sein.

Die Signalisisierungseinrichtung zum Signalisieren einer Gewichtsbelastung wenigstens eines Bereichs des Flachelements durch wenigstens eine auf dem Flachelement angeordnete Ware weist besonders bevorzugt wenigstens einen Kraftsensor zur Messung der Gewichtsbelastung auf, der an dem Flachelement angeordnet bzw. angebracht ist.

Bei dem Kraftsensor handelt es sich um einen Kraftsensor zur Messung bzw. zur elektrischen Messung einer auf den Kraftsensor einwirkenden Gewichtskraft bzw. zur Messung bzw. elektrischen Messung einer Gewichtsbelastung des Kraftsensors, wobei die Messfläche des Kraftsensors, über welche die zu messende Gewichtskraft in den Kraftsensor zur Messung derselben einzuleiten ist bzw. über welche die zu messende Gewichtskraft auf den Kraftsensor zu übertragen ist, eine Anordnung in Bezug auf das Flachelement aufweist, bei welcher eine Gewichtsbelastung des Flachelements durch eine oder mehrere Waren durch den Kraftsensor messbar ist. Dies bedeutet, dass die Messfläche des Kraftsensors besonders bevorzugt parallel bzw. besonders bevorzugt im Wesentlichen parallel zu einer der beiden Flachseiten des Flachelements angeordnet ist. Der Kraftsensor kann insbesondere derart an dem Flachelement angebracht sein, dass sich die Messfläche des Kraftsensors im auf die Ablagefläche des Ablageelements aufgelegten Zustand des Flachelements über dem Flachelement oder zwischen dem Flachelement und der Ablagefläche des Ablageelements befindet. Besonders bevorzugt kann die Signalisierungseinrichtung auch teilweise in das Kunststoffmaterial des Flachelements derart eingebettet sein, dass die Messfläche des Kraftsensors in das Kunststoffmaterial des Flachelements eingebettet ist bzw. dass die Messfläche des Kraftsensors in dem Kunststoffmaterial aufgenommen ist, wobei das Kunststoffmaterial besonders bevorzugt aus einem Thermoplasten, wie beispielsweise Polypropylen oder Polyethylen, besteht, um eine wirksame Kraftübertragung der Gewichtskraft durch das Kunststoffmaterial des Flachelements hindurch auf die Messfläche des Kraftsensors realisieren zu können. Bei dem Kraftsensor kann es sich um einen dem Fachmann geläufigen Kraftsensor handeln. So kann es sich z.B. um einen Kraftsensor mit Dehnungsmessstreifen oder z.B. um einen Piezo-Kraftsensor bzw. einen piezoelektrischen Kraftsensor oder z.B. um einen resistiven Kraftsensor handeln.

Die Signalisierung einer bestehenden Gewichtsbelastung des Flachelements kann, wie bereits oben dargelegt, besonders bevorzugt durch ein von der Signalisierungseinrichtung ausgegebenes Signal erfolgen, das also über die Gewichtsbelastung informiert. Typischerweise könnte dieses Signal ein von einer Signalerzeugungseinrichtung der Signalisierungseinrichtung erzeugtes bzw. erzeugbares Signal sein oder ein von einem Signalgeber der Signalisierungseinrichtung erzeugtes bzw. erzeugbares Signal sein, wobei die Signalerzeugungseinrichtung bzw. der Signalgeber dieses Signal vorzugsweise aus dem von dem Kraftsensor ausgegeben Messsignal erzeugt bzw. bildet bzw. auf der Grundlage des von dem Kraftsensor ausgegeben Messsignals erzeugt bzw. bildet. Dieses elektrische Signal könnte besonders praktisch z.B. in Form eines Rechtecksignals ausgebildet sein, das z.B. bei Überschreitung oder Unterschreitung eines Signal-Schwellwertes des Messsignals des Kraftsensors von der Signalerzeugungseinrichtung erzeugbar sein kann.

Bei der Signalisisierungseinrichtung handelt es sich um eine Signalisisierungseinrichtung zum Signalisieren einer Gewichtsbelastung wenigstens eines Bereichs des Flachelements durch wenigstens eine auf dem Flachelement angeordnete Ware. Besonders vorteilhaft kann es sich bei der Signalisisierungseinrichtung um eine Signalisisierungseinrichtung handeln, die dazu eingerichtet ist, eine Gewichtskraft zu signalisieren, die über eine beliebige Teilfläche einer der Flachseiten des Flachelements von wenigstens einer Ware auf das Flachelement übertragen wird. Dies kann besonders praktisch derart erfolgen, dass die Signalisisierungseinrichtung einen Kraftsensor zur Messung der Gewichtsbelastung mit einer Messfläche aufweist, die der Flächengröße der Flachseite entspricht oder größer als diese ausgebildet ist.

Bei der Ablagefläche des Ablageelements handelt es sich um eine Ablagefläche zum Ablegen bzw. Anordnen von wenigstens einer Ware, auf welcher erfindungsgemäß anstelle der Ware bzw. Waren das Flachelement aufzulegen bzw. flächig aufzulegen ist. Auf das Flachelement ist wiederum die wenigstens eine Ware zum Zwecke der Ermittlung des warenspezifischen Kaufverhaltens bzw. des warenspezifischen Warenbestands aufzulegen bzw. anzuordnen.

Bei einer besonders bevorzugten Ausführungsform der Einrichtung ist das Flachelement länglich ausgebildet und die Einrichtung weist mehrere Signalisierungseinrichtungen mit jeweils einem Kraftsensor auf, wobei die Messflächen der Signalisierungseinrichtungen in Längsrichtung des Flachelements besonders bevorzugt reihenförmig aufeinanderfolgend angeordnet sind. Durch eine reihenförmige Anordnung der Kraftsensoren wird vorteilhaft eine Signalisierungsmöglichkeit über bestehende Gewichtsbelastungen von aufgelegten Waren über die gesamte Länge des Flachelements realisiert. Insbesondere kann durch die reihenförmige Anordnung jeweils eine Signalisierungseinrichtung für jeweils einen Abschnitt des Flachelements vorgesehen sein, und mithin kann also jede Signalisierungseinrichtung für wenigstes eine auf dem jeweiligen Abschnitt ggf. angeordnete Ware vorgesehen sein bzw. eine Gewichtsbelastung signalisieren. Insgesamt betrachtet kann mittels dieser Ausbildung vorteilhaft für eine große Mehrzahl von Waren ohne großen Aufwand eine warenspezifische Signalisierung der Gewichtsbelastungen realisiert werden.

Die obige Aufgabe - bzw. die obigen Aufgaben - wird/werden gelöst durch ein erfindungsgemäßes System umfassend wenigstens eine Einrichtung, wenigstens eine Ablagevorrichtung für ein Warenregal und ein Bestromungssystem zur Bestromung mehrerer elektronischer Anzeigeeinrichtungen zur Anzeige von warenbezogenen Informationen, wobei die Ablagevorrichtung ein Ablageelement mit einer Ablagefläche aufweist, auf welcher das Flachelement auflegbar ist, wobei das Bestromungssystem einen an der Ablagevorrichtung anbringbaren länglichen Grundkörper aus einem Kunststoffmaterial und wenigstens eine Abschlusseinrichtung aufweist, wobei der Grundkörper einen sich über die gesamte Länge des Grundkörpers erstreckenden Kanal zur Aufnahme der Anzeigeeinrichtungen aufweist, wobei der Grundkörper zwei entgegengesetzte Endabschnitte aufweist, wobei jeder der Endabschnitte einen von zwei entgegengesetzten Kanal-Endabschnitten des Kanals aufweist, wobei die Anzeigeeinrichtungen in dem Kanal aufnehmbar sind, wobei das Bestromungssystem wenigstens zwei Stromleiter aufweist, wobei jeder der Stromleiter zwei Stromleiter-Endabschnitte und einen Zwischenabschnitt aufweist, wobei der Zwischenabschnitt jedes Stromleiters in dem Kanal angeordnet ist und von jedem Stromleiter jeweils einer der Stromleiter-Endabschnitte in jeweils einem der beiden entgegengesetzten Kanal-Endabschnitte mit wenigstens einem Teilabschnitt angeordnet ist, wobei durch Aufnehmen der Anzeigeeinrichtungen in dem Kanal jeweils ein Stromversorgungskontakt jeder Anzeigeeinrichtung mit jeweils einem der Stromleiter elektrisch leitend kontaktierbar ist, wobei die Abschlusseinrichtung wenigstens zwei elektrische Versorgungsleitungen aufweist, die zum Herstellen einer Verbindung mit einer Stromquelle vorgesehen sind, wobei die Abschlusseinrichtung mit wenigstens einem der beiden entgegengesetzten Endabschnitte des Grundkörpers verbindbar ist, wobei durch Verbinden der Abschlusseinrichtung mit dem Endabschnitt des Grundkörpers jeweils ein Versorgungsleitungs-Endabschnitt jeder der Versorgungsleitungen mit jeweils einem Stromleiter-Endabschnitt der Stromleiter-Endabschnitte elektrisch leitend kontaktierbar ist, die in dem Kanal-Endabschnitt des Endabschnitts des Grundkörpers mit wenigstens einem Teilabschnitt angeordnet sind, also dem Endabschnitt des Grundkörpers mit welchem die Abschlusseinrichtung verbunden wird bzw. werden soll.

Bei dem länglichen Grundkörper aus einem Kunststoffmaterial handelt es sich besonders bevorzugt um einen extrudierten Grundköper bzw. einem im Wege der Extrusion hergestellten Grundkörper. Derartige Grundkörper sind kostengünstig in großer Vielzahl und hoher gleichbleibender Qualität herstellbar. Als Material hierfür eignen sich thermoplastische Kunststoffmaterialien, wie beispielsweise Polypropylen oder Polyethylen.

Bei dem länglichen Grundkörper aus einem Kunststoffmaterial zum Anbringen an der Ablagevorrichtung bzw. Abstellvorrichtung für das Warenregal bzw. des Warenregals handelt es sich also um einen länglichen Grundkörper, der zum Anbringen an der Ablagevorrichtung vorgesehen ist bzw. welcher an der Ablagevorrichtung anbringbar bzw. mit dieser Ablagevorrichtung verbindbar ist. Die Ablagevorrichtung kann hierbei insbesondere einen Regalboden eines Warenregals bzw. für ein Warenregal umfassen bzw. in Form eines Regalbodens eines Warenregals bzw. für ein Warenregal ausgebildet sein. Zum Halten des Grundkörpers an der Ablagevorrichtung kann der Grundkörper z.B. wenigstens einen Bereich aufweisen, der in einer an der Ablagevorrichtung vorgesehenen Aufnahme aufnehmbar ist. Der wenigstens eine Bereich kann z:b auch ein hakenförmiger Bereich sein, der in eine an Ablagevorrichtung vorgesehene Aufnahme einhängbar ist.

Das Bestromungssystem zur Bestromung mehrerer Anzeigeeinrichtungen zur Anzeige von warenbezogenen Informationen weist den länglichen Grundkörper aus einem Kunststoffmaterial und wenigstens eine Abschlusseinrichtung auf. Der Grundkörper, der vorzugsweise ein extrudierter Grundköper bzw. ein durch Extrusion hergestellte Grundkörper ist, weist einen sich über die gesamte Länge des Grundkörpers erstreckenden Kanal zur Aufnahme der Anzeigeeinrichtungen auf bzw. der Grundköper weist eine sich über die gesamte Länge des Grundkörpers erstreckende längliche Aufnahme zur Aufnahme der Anzeigeeinrichtungen auf.

Der Kanal bzw. die Aufnahme erstreckt sich über die gesamte Länge des Grundkörpers bzw. der Kanal oder die Aufnahme erstreckt sich von einem von zwei entgegengesetzten Enden des Grundkörpers bis zu dem anderen der beiden entgegengesetzten Enden des Grundkörpers.

Der Grundkörper weist zwei entgegengesetzte Endabschnitte auf bzw. der Grundkörper weist zwei längsläufig zueinander entgegengesetzte Endabschnitte auf, wobei jeder der Endabschnitte des Grundkörpers einen bzw. jeweils einen von zwei entgegengesetzten Kanal-Endabschnitten des Kanals aufweist bzw. einen bzw. jeweils einen von zwei längsläufig zueinander entgegengesetzten Kanal-Endabschnitten des Kanals aufweist (bzw. einen von zwei entgegengesetzten Aufnahme-Endabschnitten der Aufnahme aufweist bzw. einen von zwei längsläufig zueinander entgegengesetzten Aufnahme-Endabschnitten der Aufnahme aufweist) bzw. wobei sich an jeweils einem von zwei entgegengesetzten - bzw. längsläufig zueinander entgegengesetzten - Endabschnitten des Grundkörpers jeweils ein Kanal-Endabschnitt bzw. ein Aufnahme-Endabschnitt befindet.

Die Anzeigeeinrichtungen sind in dem Kanal aufnehmbar, wobei die Anzeigeeinrichtungen in dem Kanal zur Realisierung einer Reihe von aufeinanderfolgend angeordneten Anzeigeeinrichtungen vorzugsweise entlang der Längsachse des Grundkörpers aufeinanderfolgend in dem Kanal aufnehmbar sind bzw. unter Ausbildung einer sich entlang der Längsachse des Grundkörpers erstreckenden Reihe in dem Kanal aufnehmbar bzw. aufeinanderfolgend aufnehmbar sind. Diese reihenförmige Anordnung ermöglicht vorteilhaft eine Anordnung des Bestromungssystems in Umgebung eines Warenregals, bei welcher jeweils eine Anzeigeeinrichtung vom potentiellen Käufer oder Kaufinteressenten unmittelbar der zugehörigen Ware zugeordnet werden kann, und zwar der Waren von mehreren Waren, die ebenfalls reihenförmig aufeinanderfolgend auf der Ablagevorrichtung bzw. einem Regalbodens eines Warenregals abgestellt bzw. angeordnet sind.

Der Kanal des Grundkörpers, der zur Aufnahme der Anzeigeeinrichtungen vorgesehen bzw. eingerichtet ist, erstreckt sich über die gesamte Länge des Grundkörpers. Der Kanal ist besonders bevorzugt ein zur Längsachse des Grundkörpers parallel ausgerichteter Kanal bzw. der Kanal ist besonders bevorzugt ein zur Längsachse des Grundkörpers parallel ausgerichteter länglicher Kanal. Sofern es sich vorzugsweise um einen extrudierten Grundkörper handelt, ist der Kanal ein beim extrudieren des Grundkörpers gebildeter Kanal. Infolge der Erstreckung über die gesamte Länge des Grundkörpers ist der Kanal bzw. die Aufnahme zu beiden Stirnseiten des Grundkörpers hin offen bzw. zugänglich. Besonders bevorzugt ist der Kanal auch zu einer Längsseite des Grundkörpers offen bzw. zugänglich, so dass die Anzeigeeinrichtungen von der Längsseite her in dem Kanal aufgenommen werden können. Dies hat den Vorteil, dass die Anzeigeeinrichtungen zur Realisierung einer Reihe von aufeinanderfolgend an dem Grundkörper angeordneten Anzeigeeinrichtungen nicht stirnseitig nacheinander in den Kanal eingeschoben werden müssen, was sich je nach Ausführung des Kanals infolge von Verkantungen schwierig gestalten kann.

Die bzw. jede der Anzeigeeinrichtungen ist in dem Kanal aufnehmbar, wobei die bzw. jede Anzeigeeinrichtung in dem Kanal insbesondere kraftschlüssig aufnehmbar sein kann. Besonders praktisch kann die bzw. jede Anzeigeeinrichtung durch Aufnehmen in dem Kanal mit dem extrudierten Grundkörper eine lösbare Schnappverbindung ausbilden.

Das Bestromungssystem weist wenigstens zwei in dem Kanal angeordnete Stromleiter auf, wobei jeder der Stromleiter zwei Stromleiter-Endabschnitte und einen Zwischenabschnitt aufweist, wobei der Zwischenabschnitt jedes Stromleitersin dem Kanal angeordnet ist und von jedem Stromleiter jeweils einer der Stromleiter-Endabschnitte in jeweils einem der beiden entgegengesetzten Kanal-Endabschnitte mit wenigstens einem Teilabschnitt angeordnet ist.

Bei den voneinander beabstandeten Stromleitern kann es sich um Stromleiter mit einer dem Fachmann geläufigen Ausbildung aufweisen. So können die Stromleiter z.B. insbesondere in Form von Leiterbahnen ausgebildet sein, wobei die Leiterbahnen z.B. Leiterbahnen aus Kupfer, aus verkupfertem Aluminium oder aus verzinktem Aluminium oder aus verkupfertem Gold oder aus Silber oder aus Graphit oder aus leitfähigen Polymeren (wie z.B. PEDOT-PSS, PANI, etc.) oder aus verschiedenen Kohlenstoffmodifikationen (wie z.B. CNTs, Fullerene etc.) sein können. Die Leiterbahn können zum Halten derselben in dem Kanal z.B. auf das Kunststoffmaterial des Grundkörpers aufextrudiert oder aufkaschiert oder aufgedruckt sein oder jede der Leiterbahnen kann zum Halten derselben in dem Kanal in Form eines länglichen Teilstücks eines länglichen leitenden Körpers ausgebildet sein, wobei ein weiteres Teilstück des länglichen leitenden Körpers in das Kunststoffmaterial des extrudierten Grundkörpers z.B. einextrudiert, eingedrückt, eingeklebt oder eingeclipst sein kann.

Das erfindungsgemäße System zeichnet sich zum einen dadurch aus, das durch Aufnehmen der Anzeigeeinrichtungen in dem Kanal jeweils ein Stromversorgungskontakt jeder Anzeigeeinrichtung mit jeweils einem der Stromleiter elektrisch leitend kontaktierbar ist. So kann vorteilhaft auf einfache und praktische Weise für jede in dem Kanal aufzunehmende Anzeigeeinrichtung zur Anzeige von warenbezogenen Informationen eine für die Stromversorgung der Anzeigeeinrichtungen erforderliche Kontaktierung der in dem Kanal angeordneten Stromleiter mit den Stromversorgungskontakten bzw. Spannungsversorgungskontakten der Anzeigeeinrichtungen bzw. den Stromversorgungsanschlüssen bzw. den Spannungsversorgungsanschlüssen der Anzeigeeinrichtungen realisiert werden.

Ferner zeichnet sich das erfindungsgemäße System dadurch aus, dass die Abschlusseinrichtung- bzw. die wenigstens eine Abschlusseinrichtung- wenigstens zwei elektrische Versorgungsleitungen aufweist, die zum Herstellen einer Verbindung mit einer Stromquelle vorgesehen sind bzw. die zum Anschließen an eine Stromquelle vorgesehen sind, wobei die Abschlusseinrichtung mit wenigstens einem der beiden entgegengesetzten Endabschnitte des Grundkörpers verbindbar ist, und wobei durch Verbinden der Abschlusseinrichtung mit dem Endabschnitt des Grundkörper jeweils ein Versorgungsleitungs-Endabschnitt (bzw. Versorgungsleitungsendabschnitt) jeder der Versorgungsleitungen mit jeweils einem Stromleiter-Endabschnitt der Stromleiter-Endabschnitte elektrisch leitend kontaktierbar ist, die in dem Kanal-Endabschnitt des Endabschnitts des Grundkörpers mit wenigstens einem Teilabschnitt angeordnet sind.

Die vorgesehene Kontaktierbarkeit der Stromversorgungskontakte jeder der Anzeigeeinrichtungen mit den in dem Kanal angeordneten Stromleitern durch Aufnehmen der Anzeigeeinrichtungen in dem Kanal zusammen mit der durch einfaches Verbinden der Abschlusseinrichtung mit dem Endabschnitt realisierbaren elektrischen Kontaktierung der Versorgungsleitungs-Endabschnitte der Abschlusseinrichtung mit den Stromleiter-Endabschnitten der Stromleiter ermöglicht vorteilhaft eine auf sehr einfache und praktische Weise realisierbare Bereitstellung der Stromversorgung bzw. Spannungsversorgung der Anzeigeeinrichtungen über die elektrischen Versorgungsleitungen der Abschlusseinrichtung, die zum Herstellen einer Verbindung mit einer Stromquelle bzw. einer externen Stromquelle vorgesehen sind bzw. die zum Herstellen einer elektrisch leitenden Verbindung mit einer Stromquelle bzw. einer externen Stromquelle bzw. mit einer Spannungsquelle bzw. mit einer externen Spannungsquelle vorgesehen sind. Die Stromversorgung aller Anzeigeeinrichtungen kann also einfach dadurch realisiert werden, dass die Anzeigeeinrichtungen in dem Kanal aufgenommen werden, die Abschlusseinrichtung mit dem Endabschnitt des Grundkörpers verbunden wird, hiernach die Versorgungsleitungen der Abschlusseinrichtung an eine Stromquelle angeschlossen werden bzw. elektrische leitende Verbindungen der Versorgungsleitungen zu einer Stromquelle hergestellt werden und die Anzeigeeinrichtungen von der Stromquelle über die Versorgungsleitungen bestromt werden bzw. mit einer Versorgungsspannung versorgt werden, wobei dies z.B. bei einer Gleichstromquelle dadurch erfolgen kann, dass eine der Versorgungsleitungen an den Pluspol der Stromquelle angeschlossen wird und die andere der beiden Versorgungsleitungen an den Minuspol der Stromquelle angeschlossen wird. Insgesamt betrachtet kann infolge der mittels des erfindungsgemäßen Systems bzw., Bestromungssystems sehr einfach realisierbaren Stromversorgung der Anzeigeeinrichtungen der Verkabelungsaufwand für die Bereitstellung der Stromversorgung reduziert bzw. deutlich reduziert werden. Nach der Aufnahme der Anzeigeeinrichtungen in dem Kanal sind lediglich die Versorgungsleitungen an die jeweilige Stromquelle bzw. Spannungsquelle anzuschließen. Ein aufwendiges Verkabeln jeder einzelnen Anzeigeeinrichtung, wie es bei bekannten Lösungen der Fall ist, kann vorteilhaft entfallen. So können der Installationsaufwand und mithin insbesondere auch Installationskosten deutlich reduziert werden.

Bei den Anzeigeneinrichtungen zur Anzeige von warenbezogenen Informationen bzw. produktbezogenen Informationen kann es sich um geläufige bzw. bekannte Anzeigeeinrichtungen bzw. elektronische Anzeigeeinrichtungen handeln, die für Anzeige von warenbezogenen Informationen bzw. produktbezogenen Informationen vorgesehen sind bzw. eingerichtet sind und welche typischerweise ein elektronisches Display aufweisen. Insbesondere kann es sich um Anzeigeeinrichtungen mit einem elektronischen Display handeln, die in Form sogenannter ESLs (Electronic Shelf Labels) ausgebildet sind, die auch als elektronisches Preisschild bezeichnet werden. Größenordnungsmäßig können diese Anzeigeeinrichtungen eine Länge innerhalb eines Bereichs von 2 bis 125 cm, eine Höhe innerhalb eines Bereichs von 2 bis 50 cm und eine Dicke innerhalb eines Bereichs von 0,2 bis 2 cm aufweisen.

Bei den warenbezogenen Informationen kann es sich um beliebige Informationen über die jeweilige Ware handeln, also z.B. um den Preis der Ware, die Bezeichnung der Ware, das Haltbarkeitsdatum, das Gewicht usw.

Bei dem Bestromungssystem weist jeder der Stromleiter zwei Stromleiter-Endabschnitte auf, von denen jeweils einer in einem der beiden entgegengesetzten Kanal-Endabschnitte mit wenigstens einem Teilabschnitt angeordnet ist. Das heißt also, dass bei einem der Stromleiter ein erster der beiden Stromleiter-Endabschnitte in einem ersten der beiden entgegengesetzten Kanal-Endabschnitte mit wenigstens einem Teilabschnitt angeordnet ist und der zweite Stromleiter-Endabschnitt dieses Stromleiters in dem zweiten der beiden entgegengesetzten Kanal-Endabschnitte mit wenigstens einem Teilabschnitt angeordnet ist. Ein Zwischenabschnitt des jeweiligen Stromleiters, der sich von dem ersten Stromleiter-Endabschnitt bis zu dem zweiten Stromleiter-Endabschnitt erstreckt bzw. den ersten Stromleiter-Endabschnitt mit dem zweiten Stromleiter-Endabschnitt verbindet, ist dann in einem mittleren Bereich des Kanals angeordnet, der von dem ersten Kanal-Endabschnitt bis zu dem zweiten Kanal-Endabschnitt reicht. Jeder der Stromleiter erstreckt sich besonders bevorzugt über die gesamte Länge des Grundkörpers. Ferner ist jeder der Stromleiter besonders bevorzugt geradlinig ausgebildet und erstreckt sich besondere bevorzugt parallel bzw. im Wesentlichen parallel zur Längsachse des extrudierten Grundkörpers. Allerdings ist dies nicht zwingend. Erfindungsgemäß ist lediglich zu bewerkstelligen, dass durch Aufnehmen der Anzeigeeinrichtungen in dem Kanal jeweils einer der Stromversorgungskontakte jeder Anzeigeeinrichtung mit jeweils einem der Stromleiter elektrisch leitend kontaktierbar ist. Diese Kontaktierbarkeit kann in einer dem Fachmann geläufigen Weise insbesondere durch geeignete Anpassung der Abmessungen des Kanals an die relevanten Abmessungen des bzw. der Anzeigeeinrichtungen erfolgen.

Die Abschlusseinrichtung weist wenigstens zwei elektrische Versorgungsleitungen auf, die zum Herstellen einer Verbindung mit einer Stromquelle bzw. zum Anschließen an eine Stromquelle vorgesehen sind. Es versteht sich, dass es sich bei den Versorgungsleitungen wenigstens abschnittsweise insbesondere um stromführende Leiter bzw. Innenleiter bzw. Seelen eines Versorgungskabels handeln kann, die besonders bevorzugt stromführende Leiter bzw. Innenleiter eines einzigen Versorgungskabels sind.

Es versteht sich, dass jeder der Stromleiter-Endabschnitte z.B. auch in Form eines stromleitenden Kontakts eines Steckers oder Gegensteckers ausgebildet sein kann. Es versteht sich auch, dass jeder der Versorgungsleitungs-Endabschnitte auch in Form eines stromleitenden Kontakts eines entsprechenden Gegensteckers bzw. Steckers ausgebildet sein kann, so dass durch Verbinden der Abschlusseinrichtung mit dem Endabschnitt des Grundkörpers auch Steckerverbindungen ausbildbar sein können, um die elektrisch leitende Kontaktierung bzw. die elektrische leitende Verbindung zwischen den Versorgungsleitungs-Endabschnitten und den Stromleiter-Endabschnitten zu realisieren.

Die Abschlusseinrichtung ist mit wenigstens einem der beiden entgegengesetzten Endabschnitte des Grundkörpers verbindbar, wobei die Abschlusseinrichtung mit dem Endabschnitt des Grundkörpers besonders bevorzugt kraftschlüssig verbindbar ist. Insbesondere kann die Abschlusseinrichtung vorzugsweise einen Einsteckkörper aufweisen, der zum Ausbilden einer kraftschlüssigen Verbindung mit dem extrudierten Grundkörper stirnseitig in den Kanal des extrudierten Grundkörpers einsteckbar ist.

Besonders bevorzugt ist die Abschlusseinrichtung mit wenigstens einem der beiden entgegengesetzten Endabschnitte des Grundkörpers lösbar verbindbar bzw. manuell lösbar verbindbar, so dass die Abschlusseinrichtung insbesondere für Wartungszwecke oder Reparaturzwecke von dem vorzugsweise extrudierten Grundkörper vorteilhaft gelöst und auch ggf. mit diesem wieder verbunden werden kann.

Durch Verbinden der Abschlusseinrichtung mit dem Endabschnitt des Grundkörpers ist jeweils ein Versorgungsleitungs-Endabschnitt jeder der Versorgungsleitungen mit jeweils einem Stromleiter-Endabschnitt der Stromleiter-Endabschnitte elektrisch leitend kontaktierbar, die in dem Kanal-Endabschnitt des Endabschnitts mit wenigstens einem Teilabschnitt angeordnet sind. Diese Kontaktierbarkeit kann in einer dem Fachmann geläufigen Weise insbesondere durch geeignete Anordnung der Versorgungsleitungs-Endabschnitte erfolgen. So kann z.B. jeder der Versorgungsleitungs-Endabschnitte bei bestehender Verbindung zwischen Grundkörper und Abschlusseinrichtung insbesondere in den Kanal des Grundkörpers hineinragen, um die Kontaktierung zu den Stromleiter-Endabschnitten, die jeweils mit wenigstens einem Teilabschnitt in dem Kanal angeordnet sind, zu realisieren.

Jeder Stromleiter weist zwei Stromleiter-Endabschnitte auf, von denen jeweils einer in einem der beiden entgegengesetzten Kanal-Endabschnitte mit wenigstens einem Teilabschnitt angeordnet ist. Der jeweilige Stromleiter-Endabschnitt ist also mit wenigstens einem Teilabschnitt in einem der beiden entgegengesetzten Kanal-Endabschnitte angeordnet, so dass also der jeweilige Stromleiter-Endabschnitt insbesondere auch vollständig bzw. zur Gänze in dem jeweiligen Kanal-Endabschnitt angeordnet sein kann bzw. in dem Kanal angeordnet sein kann, und zwar ohne aus dem Kanal-Endabschnitt herauszuragen. Bevorzugt kann jedoch auch vorgesehen sein, dass nur ein Teilabschnitt des jeweiligen Stromleiter-Endabschnitt in dem Kanal-Endabschnitt angeordnet ist, so dass ein weiterer Teilabschnitt des jeweiligen Stromleiter-Endabschnitts also insbesondere auch außerhalb des jeweiligen Kanal-Endabschnitts angeordnet sein kann bzw. aus dem jeweiligen Kanal-Endabschnitt herausragen kann.

Bei dem erfindungsgemäßen System wird die oben beschriebene Einrichtung mit dem oben beschriebenen vorteilhaften Bestromungssystem zur Bestromung der Anzeigeeinrichtungen kombiniert, so dass also insgesamt vorteilhaft eine auf sehr einfache und praktische Weise realisierbare Bereitstellung der Stromversorgung bzw. Spannungsversorgung der Anzeigeeinrichtungen in Verbindung mit einer Einrichtung möglich ist, die vorteilhaft dazu beitragen kann, den Aufwand zur Ermittlung eines warenbezogenen Kaufverhaltens bzw. eines Warenbestand deutlich zu reduzieren.

Der Grundkörper weist erfindungsgemäß einen weiteren Kanal auf, der sich über die gesamte Länge des Grundkörpers erstreckt, wobei in wenigstens einem Abschnitt des weiteren Kanals eine Stromschiene mit wenigsten zwei sich in Längsrichtung der Stromschiene ersteckenden elektrischen Stromschienen-Leitern angeordnet ist, wobei die Signalisisierungseinrichtung wenigstens zwei Stromversorgungsleiter für die Stromversorgung der Signalisisierungseinrichtung aufweist, wobei jeweils ein Endabschnitt jeder der Stromversorgungsleiter an jeweils einen der Stromschienen-Leiter anschließbar ist, wobei der weitere Kanal zu einer Längsseite des Grundkörpers hin offen ist, so dass die Endabschnitte der Stromversorgungsleiter von außerhalb des weiteren Kanals an die Stromschienen-Leiter anschließbar sind, wobei die Abschlusseinrichtung wenigstens zwei weitere elektrische Versorgungsleitungen aufweist, die zum Herstellen einer Verbindung mit einer Stromquelle vorgesehen sind, wobei durch Verbinden der Abschlusseinrichtung mit dem Endabschnitt des Grundkörpers bzw. mit jeweils einem der beiden Endabschnitte des Grundkörpers jeweils ein Versorgungsleitungs-Endabschnitt jeder der weiteren Versorgungsleitungen mit jeweils einem Stromschienen-Leiter der Stromschiene bzw. mit jeweils einem Endabschnitt des Stromschienen-Leiters elektrisch leitend kontaktierbar ist.

Bei dem erfindungsgemäßen System können nach Anschließen der Stromversorgungsleiter der Einrichtung an den jeweiligen Stromschienen-Leiter durch einfach vornehmbares Verbinden der Abschlusseinrichtung mit einem Endabschnitt des Grundkörpers zu Stromversorgung der Signalisierungseinrichtung elektrisch leitende Verbindungen zu den weiteren Versorgungsleitungen der Abschlusseinrichtung hergestellt werden, die wiederum zum Herstellen einer Verbindung mit einer Stromquelle vorgesehen sind. Besonders vorteilhaft ist der weitere bzw. der zweite Kanal zu einer Längsseite des Grundkörpers hin offen, so dass die Endabschnitte der Stromversorgungsleiter der Signalisierungseinrichtungen(en) von außerhalb des weiteren Kanals an die Stromschienen-Leiter anschließbar sind. Dies ist insbesondere von Vorteil, wenn mehrere Signalisierungseinrichtungen vorgesehen sind, da die jeweiligen Endabschnitte der Stromversorgungsleiter der Signalisierungseinrichtungen dann vorteilhaft von der Längsseite her entlang der Stromschiene aufeinanderfolgend an die Stromschienen-Leiter anschließbar sind, wodurch vorteilhaft insbesondere ein sehr aufgeräumte Verkabelung realisiert werden könnte, was insbesondere auch sicherheitstechnisch von Vorteil sein kann. Die aufeinanderfolgende Anschliessbarkeit entlang der Stromschiene kann insbesondere für eine Mehrzahl von Signalisierungseinrichtungen mit jeweils einem Kraftsensor von Vorteil sein, die dafür vorgesehen sind mit ihren jeweiligen Kraftsensor-Messflächen auch aufeinanderfolgend entlang der Längsachse des Flachelements angeordnet zu werden.

Bei einer weiteren bevorzugten Ausführungsform des erfindungsgemäßen Systems kann die Stromschiene auch wenigstens einen sich in Längsrichtung der Stromschiene ersteckenden Signalleiter zur Weiterleitung von Signalen aufweisen bzw. zusätzlich aufweisen, wobei (auch) die Signalisisierungseinrichtung wenigstens einen Signalleiter zur Weiterleitung von Signalen bzw. Messsignalen der Signalisisierungseinrichtung aufweist, wobei der Signalleiter der Signalisisierungseinrichtung an den Signalleiter der Stromschiene anschließbar ist, wobei die Abschlusseinrichtung - zusätzlich zu den elektrischen Versorgungsleitungen - wenigstens eine Signalübertragungsleitung aufweist, die zum Übertragen von Messsignalen der Signalisisierungseinrichtung an eine Messsignalverarbeitungseinrichtung vorgesehen ist, wobei durch Verbinden der Abschlusseinrichtung mit dem Endabschnitt des Grundkörpers der Signalleiter der Stromschiene signalübertragend mit der Signalübertragungsleitung verbindbar ist.

Mittels dieser bevorzugten Ausführungsform kann nach zusätzlichem Anschließen des bzw. der Signalleiter der Signalisierungseinrichtung bzw. Signalisierungseinrichtungen an den Signalleiter der Stromschiene und anschließendem Verbinden der Abschlusseinrichtung mit dem jeweiligen Endabschnitt des Grundkörpers eine signalübertragbare Verbindung zwischen dem Signalleiter(n) der Signalisisierungseinrichtung(en) und der(den) Signalübertragungsleitung(en) der Abschlusseinrichtung hergestellt werden. Über die Signalübertragungsleitung(en) der Abschlusseinrichtung kann dann eine signalübertragbare Verbindung zu einer Messsignalverarbeitungseinrichtung bzw. Signalverarbeitungseinrichtung hergestellt werden, die für die Verarbeitung von Messsignalen oder Signalen zum Signalisieren einer vorliegenden Gewichtsbelastung des Flachelements eingerichtet ist bzw. vorgesehen ist.

Die Stromschiene kann sich zur Realisierung einer möglichst großen Zahl von Anschlussverbindungen besonders vorteilhaft über die gesamte Länge des Grundkörpers des Bestromungssystems erstrecken.

Bei einer bevorzugten Ausführungsform des erfindungsgemäßen Systems weist die Abschlusseinrichtung einen Flachkörper aus einem Kunststoffmaterial mit zwei entgegengesetzten Seiten und wenigsten zwei mit einer der beiden Seiten verbundene Einsteckkörper aus einem Kunststoffmaterial auf, wobei einer der Einsteckkörper zum Einstecken in den Kanal zur Aufnahme der Anzeigeeinrichtungen vorgesehen ist, wobei ein weiterer Einsteckkörper zum Einstecken in den Kanal vorgesehen ist, in dem die Stromschiene angeordnet ist, wobei jeder Einsteckköper zum Verbinden der Abschlusseinrichtung mit dem Endabschnitt des Grundkörpers durch stirnseitiges Einstecken in den jeweiligen Kanal in dem jeweiligen Kanal kraftschlüssig aufnehmbar ist.

Mittels dieser Abschlusseinrichtung kann auf sehr einfache und praktische Weise eine Verbindung der Versorgungsleitungs-Endabschnitte mit den Stromleiter-Endabschnitten und/oder der Signalübertragungsleitung mit dem Signalleiter der Stromschiene durch einen einfachen Einsteckvorgang realisiert werden. Das Vorsehen des Flachkörpers ermöglicht vorteilhaft eine gewichtseinsparende und optisch ansprechende Ausbildung des Flachkörpers. Die Einsteckköper sind zum Verbinden der Abschlusseinrichtung mit dem Endabschnitt des Grundkörpers durch stirnseitiges Einstecken in den jeweiligen Kanal in diesem kraftschlüssig aufnehmbar bzw. zur Gänze oder wenigstens teilweise aufnehmbar bzw. jeder Einsteccköper ist zum Verbinden der Abschlusseinrichtung mit dem Endabschnitt des Grundkörpers durch stirnseitiges Einstecken in den jeweiligen Kanal in diesem besonders bevorzugt klemmend haltbar bzw. unter Ausbildung einer Klemmspannung in dem jeweiligen Kanal haltbar. Es versteht sich, dass die mittels dieser bevorzugten Ausführungsform realisierbare Verbindung zwischen der Abschlusseinrichtung und dem Grundkörper besonders bevorzugt eine lösbare bzw. manuell lösbare Verbindung sein kann. Jeder der Einsteckkörper kann also besonders bevorzugt aus dem jeweiligen Kanal herausziehbar sein bzw. manuell aus dem jeweiligen Kanal herausziehbar sein. Durch die vorzugsweise vorgesehene Lösbarkeit der Verbindung zwischen der Abschlusseinrichtung und dem Grundkörper können vorteilhaft insbesondere Wartungsarbeiten bzw. Reparaturen auf einfache und praktische Weise vorgenommen werden.

Bei dem Kunststoffmaterial aus dem der Flachkörper und jeder der Einsteckkörper besteht, kann es sich z.B. um thermoplastische Kunststoffe, duroplastische Kunststoffe und Elastomere handeln. Bevorzugte thermoplastische Kunststoffe sind: PVC, ABS, ASA, PET, PC, PS, PA sowie alle Kunststoffe aus der Gruppe der Polyolefine, der Polyacrylate, Polycarbonate und Polyester.

Die mit den Stromleiter-Endabschnitten der Stromleiter zur Versorgung der Anzeigeeinrichtungen kontaktierbaren Versorgungsleitungs-Endabschnitte sind besonders bevorzugt an dem Einsteckköper zum Einstecken in den Kanal zur Aufnahme der Anzeigeeinrichtungen vorgesehen. Da der Einsteckkörper in dem Kanal durch Einstecken kraftschlüssig aufnehmbar ist, können durch das Vorsehen der Versorgungsleitungs-Endabschnitte an dem Einsteckkörper vorteilhaft auch stabile elektrisch leitende Kontaktierungen der Versorgungsleitungs-Endabschnitte mit den Stromleiter-Endabschnitten realisiert werden. Dementsprechend sind auch die mit jeweils einem Stromschienen-Leiter elektrisch leitend kontaktierbaren weiteren Versorgungsleitungs-Endabschnitte besonders bevorzugt an dem weiteren Einsteckkörper vorgesehen, um die stabilen elektrisch leitenden Kontaktierungen vorteilhaft realisieren zu können.

Besonders bevorzugt ist die Stirnseite des Grundkörpers durch stirnseitiges Einstecken der Einsteckkörper in die Kanäle von dem Flachelement bedeckbar. Durch die hiermit bereitgestellte Bedeckungsmöglichkeit kann ein optisch sehr ansprechender Abschluss geschaffen werden. Insbesondere kann das Flachelement eine Ausbildung aufweisen, die vorteilhaft durch stirnseitiges Einstecken des Einsteckkörpers in den Kanal bündig an den Grundkörper anschließbar ist, einhergehend mit der Schaffung eines optisch sehr ansprechenden Abschlusses.

Bei dem länglichen Grundkörper des Bestromungssystems handelt es sich vorteilhaft um einen extrudierten Grundkörper aus einem Kunststoffmaterial, also einen durch Extrusion hergestellten Grundkörper. Mittels Extrusion können im Rahmen einer automatisierten Fertigung eine Vielzahl von Grundkörpern mit gleichbleibender hoher Qualität gefertigt werden. Bei dem Kunststoffmaterial aus dem der Grundkörper besteht kann es sich z.B. um thermoplastische Kunststoffe, duroplastische Kunststoffe und Elastomere handeln. Bevorzugte thermoplastische Kunststoffe sind: PVC, ABS, ASA, PET, PC, PS, PA sowie alle Kunststoffe aus der Gruppe der Polyolefine, der Polyacrylate, Polycarbonate und Polyester.

Die Erfindung betrifft auch Warenpräsentationssystem umfassend wenigstens ein obiges erfindungsgemäßes System und wenigstens ein Warenregal mit wenigstens zwei Haltepfosten, wobei der Grundkörper des Bestromungssystems an der Ablagevorrichtung anbringbar ist, wobei die Ablagevorrichtung das Ablageelement mit der Ablagefläche und zwei Halteelemente aufweist, wobei die Halteelemente mit dem Ablageelement verbunden sind, wobei jeder Haltepfosten wenigstens eine Aufnahme aufweist, in welche jeweils eines der Halteelemente zum Halten der Ablagevorrichtung an den Haltepfosten aufnehmbar ist, wobei wenigstens einer der Haltepfosten wenigstens zwei elektrische Leiter aufweist, die zum Anschließen an eine Stromquelle vorgesehen sind, wobei wenigstens eines der Haltelemente wenigstens zwei elektrische Anschlusselemente aufweist, wobei an jedes Anschlusselement jeweils eine der Versorgungsleitungen der Abschlusseinrichtung anschließbar ist, wobei jedes Anschlusselement durch Aufnehmen des Halteelements in der Aufnahme des Haltepfostens mit jeweils einem der Leiter des Haltepfostens elektrisch leitend kontaktierbar ist.

Das Warenpräsentationssystem ist dadurch gekennzeichnet, dass es die Vorteile des obigen erfindungsgemäßen Systems mit wenigstens einem Warenregal mit wenigstens zwei Haltepfosten kombiniert. Die Haltepfosten und die wenigstens eine Ablagevorrichtung des Warenregals, zeichnen sich dadurch aus, dass über die elektrischen Leiter der Haltepfosten und die elektrischen Anschlusselemente der Halteelemente nach Anschließen der Versorgungsleitungen der Abschlusseinrichtung an die Anschlusselemente durch einfach vornehmbares Aufnehmen der Haltelemente in den Aufnahmen der Haltepfosten - und zwar zum Halten bzw. Anbringen der Ablagevorrichtung an den Haltepfosten - und nachfolgendes Anschließen der Leiter des Haltepfostens an eine Stromquelle elektrisch leitende Verbindungen der Versorgungsleitungen der Abschlusseinrichtung zu der Stromquelle herstellbar sind, und zwar zum Bestromen bzw. zur Spannungsversorgung von in dem Kanal des Grundkörpers des Bestromungssystems aufgenommenen elektronischen Anzeigeeinrichtungen und/oder zum Bestromen bzw. zur Spannungsversorgung der über die Stromschiene bestrombaren Signalisisierungseinrichtungen).

Jeder Haltepfosten weist wenigstens eine Aufnahme oder mehrere Aufnahmen aufweist, in welche jeweils eines der Halteelemente zum Halten der Ablagevorrichtung an den Haltepfosten aufnehmbar ist. Insbesondere kann jedes der Halteelemente einen in die jeweilige Aufnahme einhängbaren Endbereich aufweisen, wobei die elektrischen Anschlusselemente an dem Endbereich vorgesehen sein können. Insbesondere können die Leiter der Haltepfosten in einem Längskanal des Haltepfostens bzw. des jeweiligen Haltepfostens angeordnet sein, wobei im eingehängten Zustand des Endbereichs für jedes Anschlusselement ein elektrisch leitender Kontakt zu dem jeweiligen elektrischen Leiter des Haltepfostens vorliegt.

Der längliche Grundkörper des erfindungsgemäßen Systems ist an der Ablagevorrichtung anbringbar bzw. mit der Ablagevorrichtung verbindbar. Insbesondere kann der längliche Grundkörper des Bestromungssystems bei einer länglich ausgebildeten Ablagevorrichtung besonders bevorzugt an der Ablagevorrichtung in einer Anordnung anbringbar sein, bei welcher eine sich entlang der Längsachse des Grundkörpers erstreckende Fläche des Grundkörpers einer sich entlang der Längsachse des Ablageelements erstreckenden Fläche des Ablageelements zugewandt ist. Oder in anderen Worten: Insbesondere kann der längliche Grundkörper des Bestromungssystems bei einer länglich ausgebildeten Ablagevorrichtung besonders bevorzugt derart an der Ablagevorrichtung anbringbar sein, dass eine sich entlang der Längsachse des Grundkörpers erstreckende Fläche des Grundkörpers einer sich entlang der Längsachse des Ablageelements erstreckenden Fläche des Ablageelements zugewandt ist. In dieser Anordnung, in welcher sich die Kanäle des Grundkörpers des Bestromungssystems besonders bevorzugt parallel zur Längsachse des Ablageelements bzw. der Ablagevorrichtung erstrecken, können die Käufer bzw. die potentiellen Käufer vorteilhaft einen direkten Bezug zu der für die jeweilige Ware vorgesehenen Anzeigeeinrichtung herstellen.

Besonders praktisch sind die Halteelemente mit dem Ablageelement vorzugsweise lösbar verbunden.

Bei einer bevorzugten Ausführungsform des Warenpräsentationssystem umfasst dieses ein obiges System mit den Signalleitern, wobei wenigstens einer der Haltepfosten wenigstens eine Signalleitung aufweist, die zum Übertragen von Signalen der Signalisisierungseinrichtung an eine Signalverarbeitungseinrichtung vorgesehen ist, wobei wenigstens eines der Haltelemente wenigstens einen Signalleitungsanschluss aufweist, wobei an den Signalleitungsanschluss die Signalübertragungsleitung der Abschlusseinrichtung anschließbar ist, wobei der Signalleitungsanschluss durch Aufnehmen des Halteelements in der Aufnahme des Haltepfostens mit der Signalleitung des Haltepfostens signalübertragbar verbindbar ist.

Bei dieser bevorzugten Ausführungsform kann vorteilhaft zusätzlich durch einfach vornehmbares Anschließen der Signalübertragungsleitung der Abschlusseinrichtung an den Signalleitungsanschluss, Aufnehmen der Haltelemente in den Aufnahmen der Haltepfosten und signalübertragbares Verbinden der Signalleitung des Haltepfostens mit einer Signalverabeitungseinrichtung eine Übertragung von Signalen der Signalisierungseinrichtung an die Signalverabeitungseinrichtung realisiert werden, um diese z.B. zur Ermittlung des Kaufverhaltens oder z.B. zur Ermittlung des Warenbestands zu verarbeiten.

Nachfolgend werden Ausführungsbeispiele der Erfindung anhand der beigefügten Zeichnung näher erläutert. In der Zeichnung zeigt
- Fig. 1A: eine schematische Darstellung eines ersten Ausführungsbeispiels einer Einrichtung des erfindungsgemäßen Systems,
- Fig.1B: eine schematische dreidimensionale Darstellung eines ersten Ausführungsbeispiels eines erfindungsgemäßen Systems mit einer Einrichtung nach Fig. 1A
- Fig. 2: eine schematische Darstellung eines Bestromungssystems,,
- Fig.3: eine Schnittdarstellung eines zweiten Ausführungsbeispiels eines erfindungsgemäßen Systems ohne Veranschaulichung der Abschlusseinrichtung,
- Fig.4: eine dreidimensionale Darstellung einer Abschlusseinrichtung des zweiten Ausführungsbeispiels des erfindungsgemäßen Systems,
- Fig.5: eine schematische dreidimensionale Darstellung eines ersten Ausführungsbeispiels eines Warenpräsentationssystems und
- Fig.6: eine schematische dreidimensionale Darstellung eines zweiten Ausführungsbeispiels eines Warenpräsentationssystems.

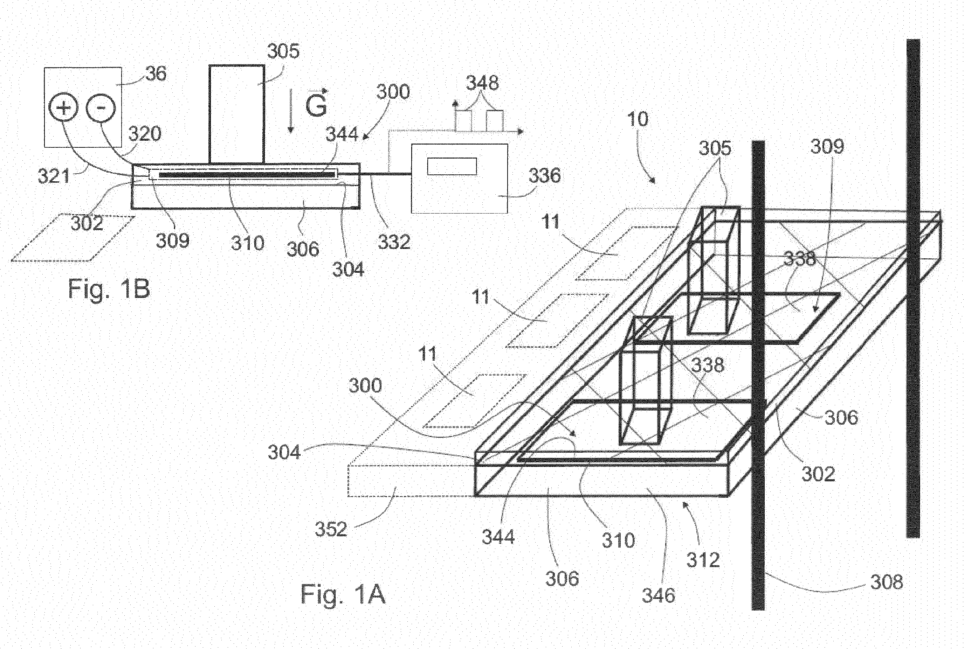

Die Einrichtung 300 nach Fig. 1A und 1B umfasst ein Flachelement 302 aus einem Kunststoffmaterial zum Anordnen bzw. Ablegen auf einer Ablagefläche 304 eines Ablageelements 306 für ein Warenregal 308 und mehrere Signalisisierungseinrichtungen 309 (der Übersichtlichkeit wegen sind nur zwei Signalisisierungseinrichtungen 309 gezeigt), die jeweils zum Signalisieren einer Gewichtsbelastung jeweils eines Bereichs 338 des Flachelements 302 durch wenigstens eine auf dem jeweiligen Bereich 338 des Flachelements 302 angeordnete Ware 305 vorgesehen sind, wobei jeder Bereich 338 in Form eines Längsabschnitts 338 des länglich ausgebildeten Flachelements 302 ausgebildet ist. Die Fig. 1A und 1B veranschaulichen hierbei schon die Situation, bei welcher das Flachelement 302 auf die Ablagefläche 304 aufgelegt ist bzw. auf dieser angeordnet ist.

Jede Signalisisierungseinrichtung 309 weist einen Kraftsensor 310 zur Messung der Gewichtsbelastung auf, wobei jede Signalisierungseinrichtung 309 - abgesehen von jeweiligen Signalleitern 332 und Stromversorgungsleitern 320 und 321 der jeweiligen Signalisierungseinrichtung 309 -in dem Kunststoffmaterial 346 des Flachelements 302 aufgenommen ist, so dass also auch die Messfläche 344 jedes Kraftsensors 310 - auf welche die von wenigstens einer Ware 305 auf das Flachelement 302 übertragene Gewichtskraft zur Messung derselben übertragen wird - in dem Kunststoffmaterial 346 aufgenommen ist.

Die mit der Ablage bzw. Anordnung einhergehende Gewichtsbelastung des Flachelements 302 wird von der jeweiligen Signalisierungseinrichtung 309 signalisiert, wobei die Signalisierung einer bestehenden Gewichtsbelastung durch ein von der Signalisierungseinrichtung 309 ausgegebenes Signal erfolgt, das also über die Gewichtsbelastung informiert, wobei dieses Signal 309 bei diesem Ausführungsbeispiel ein von einer nicht dargestellten elektronischen Signalerzeugungseinrichtung der Signalisierungseinrichtung 309 erzeugtes bzw. erzeugbares Signal ist, das in Form eines Rechtecksignals 348 ausgebildet ist und von der Signalerzeugungseinrichtung aus dem Messsignal des Kraftsensors 310 erzeugt bzw. auf der Grundlage des von dem Kraftsensor 310 ausgegebenen Messsignals erzeugt bzw. gebildet wird. Das Rechtecksignal 348 signalisiert eine bestehende Gewichtsbelastung des Flachelements 302 bzw. des jeweiligen Längsabschnitts 338 des Flachelements, wobei das Rechtecksignal 348 bei Überschreitung eines Signal-Schwellwertes des Messsignals des Kraftsensors 310 von der Signalerzeugungseinrichtung erzeugt wird bzw. erzeugt werden kann.

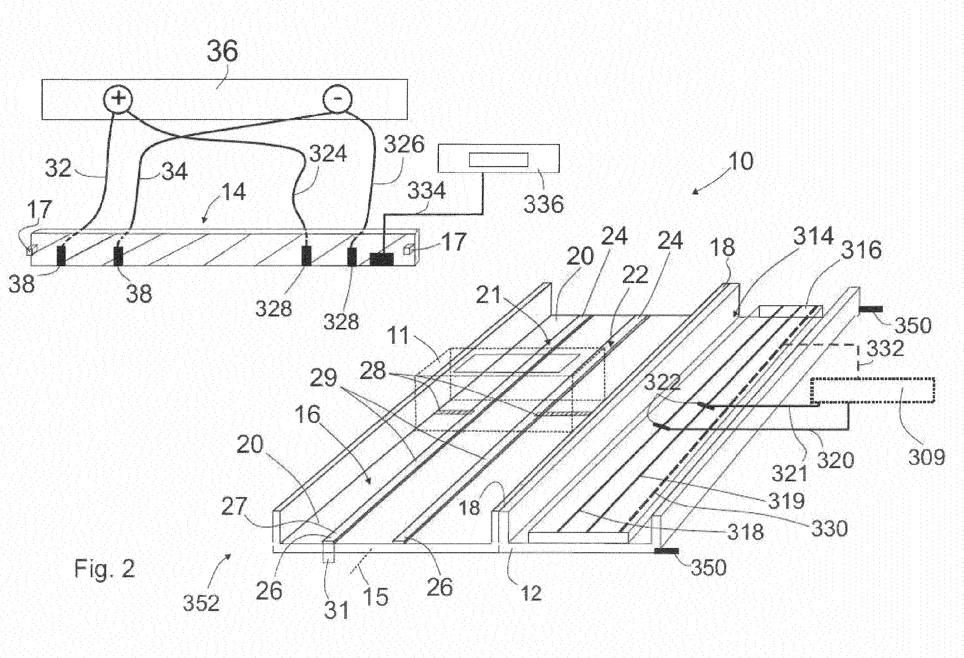

Die Fig. 1B zeigt auch sehr schematisch ein erfindungsgemäßes System 10 umfassend die Einrichtung 300 und eine Ablagevorrichtung 312 für das Warenregal 308 und ein Bestromungssystem 352 zur Bestromung mehrerer elektronischer Anzeigeeinrichtungen 11 zur Anzeige von warenbezogenen Informationen. Die Ablagevorrichtung 312 weist das Ablageelement 306 mit einer Ablagefläche 304 (vgl. Fig. 1A) auf, auf welcher das Flachelement 302 der Einrichtung 300 auflegbar ist. Das Bestromungssystem 352 ist in Fig. 1 nur skizzenhaft gezeigt und in Fig. 2 detaillierter veranschaulicht.

Das Bestromungssystem 352 (vgl. Fig. 2) weist einen an der Ablagevorrichtung 312 anbringbaren länglichen Grundkörper 12 aus einem Kunststoffmaterial und eine Abschlusseinrichtung 14 auf. Zum Anbringen bzw. zum Herstellen einer Verbindung des Grundkörpers 12 mit der Ablagevorrichtung 312 weist der Grundkörper 12 zwei nur sehr schematisch dargestellte Haltemittel 350 auf, welche in nicht dargestellten Aufnahmen der Ablagevorrichtung 312 kraftschlüssig aufnehmbar sind.

Der Grundkörper weist einen sich über die gesamte Länge des Grundkörpers 12 erstreckenden Kanal 16 zur Aufnahme der Anzeigeeinrichtungen 11 auf.

Der Grundkörper 12 weist zwei entgegengesetzte Endabschnitte 18 auf, wobei jeder der Endabschnitte 18 einen von zwei entgegengesetzten Kanal-Endabschnitten 20 des Kanals 16 aufweist. Die Anzeigeeinrichtungen 11 sind in dem Kanal 16 aufnehmbar.

Das Bestromungssystem 352 weist zwei Stromleiter 21, 22 auf, wobei jeder der Stromleiter 21, 21) zwei Stromleiter-Endabschnitte 24, 26 und einen Zwischenabschnitt 29 aufweist.

Der Zwischenabschnitt 29 jedes Stromleiters 21, 22 ist in dem Kanal 16 angeordnet und von jedem Stromleiter 21,22 ist jeweils einer der Stromleiter-Endabschnitte 24, 26 in jeweils einem der beiden entgegengesetzten Kanal-Endabschnitte 20 angeordnet. Also so ist z.B. bei dem Stromleiter 21 der Stromleiter-Endabschnitt 24 in einem der beiden Kanal-Endabschnitte 20 angeordnet und der Stromleiter-Endabschnitt 26 ist in dem anderen der beiden Kanal-Endabschnitte 20 angeordnet.

Durch Aufnehmen der Anzeigeeinrichtungen 11 in dem Kanal 16 ist jeweils ein Stromversorgungskontakt 28 jeder Anzeigeeinrichtung 11 mit jeweils einem der Stromleiter 21, 22 elektrisch leitend kontaktierbar.

Die Abschlusseinrichtung 14 weist vier elektrische Versorgungsleitungen 32, 34, 324, 326 und eine Signalübertragungsleitung 334 aufweist. Die Versorgungsleitungen 32, 34, 324, 326 sind zum Herstellen einer Verbindung mit einer Stromquelle 36 vorgesehen (veranschaulicht ist in Fig. 2 schon der verbundene Zustand) und die Signalübertragungsleitung 334 ist zum Übertragen von Signalen der Signalisisierungseinrichtungen 309 an eine Signalverarbeitungseinrichtung 336 vorgesehen.

Die Abschlusseinrichtung 14 ist mit jedem der beiden entgegengesetzten Endabschnitte 18 des Grundkörpers 12 verbindbar.

Der Grundkörper 12 weist einen weiteren bzw. zweiten Kanal 314 auf, der sich über die gesamte Länge des Grundkörpers 12 erstreckt, wobei in dem weiteren Kanal 314 eine sich über die gesamte Länge des Kanals 314 erstreckende Stromschiene 316 mit zwei sich in Längsrichtung der Stromschiene 316 ersteckenden elektrischen Stromschienen-Leitern 318, 319 und einem sich in Längsrichtung der Stromschiene 316 erstreckenden Signalleiter 330 angeordnet ist.

Jede Signalisisierungseinrichtung 309 weist zwei Stromversorgungsleiter 320, 321 (vgl. Fig.1) für die Stromversorgung der jeweiligen Signalisisierungseinrichtung 309 auf, wobei jeweils ein Endabschnitt 322 jeder der Stromversorgungsleiter 320, 321 an jeweils einen der Stromschienen-Leiter 318, 319 anschließbar ist (vgl. die schematische Skizze Fig. 2).

Der weitere Kanal 314 ist zu einer Längsseite des Grundkörpers 12 hin offen, so dass die Endabschnitte 322 der Stromversorgungsleiter 320, 321 von außerhalb des weiteren Kanals 314 an die Stromschienen-Leiter 318, 319 anschließbar sind. Ferner weist jede Signalisisierungseinrichtung 309 einen Signalleiter 332 zur Weiterleitung von Signalen der Signalisisierungseinrichtung 309 auf. Der Signaleiter 332 jeder der Signalisisierungseinrichtungen 309 ist an den Signalleiter 330 der Stromschiene 316 anschließbar (vgl. die schematische Skizze in Fig. 2).

Durch Verbinden der Abschlusseinrichtung 14 mit einem Endabschnitt 18 des Grundkörpers 12 ist jeweils ein Versorgungsleitungs-Endabschnitt 38 jeder der Versorgungsleitungen 32, 34 mit jeweils einem Stromleiter-Endabschnitt 24, 26 der Stromleiter-Endabschnitte 24, 26 elektrisch leitend kontaktierbar ist, die in dem Kanal-Endabschnitt 20 des Endabschnitts 18 des Grundkörpers 12 angeordnet sind. Durch Verbinden der Abschlusseinrichtung 14 mit dem jeweiligen Endabschnitt 18 des Grundkörpers 12 ist auch jeweils ein Versorgungsleitungs-Endabschnitt 328 jeder der weiteren Versorgungsleitungen 324, 326 mit jeweils einem Stromschienen-Leiter 318, 319 der Stromschiene 316 elektrisch leitend kontaktierbar ist. Ferner ist durch Verbinden der Abschlusseinrichtung 14 mit dem jeweiligen Endabschnitt 18 des Grundkörpers 12 der Signalleiter 330 der Stromschiene 316 signalübertragend mit der Signalübertragungsleitung 334 der Abschlusseinrichtung 14 verbindbar.

Zur Realisierung einer kraftschlüssigen Verbindung der Abschlusseinrichtung 14 mit dem jeweiligen Grundkörper-Endabschnitt 18 weist die Abschlusseinrichtung 14 zwei Einsteckzapfen 17 auf, die in Aufnahmen (nicht dargestellt) einsteckbar sind, die stirnseitig an den Endabschnitten 18 des Grundkörpers 12 vorgesehen sind (nicht dargestellt).

Die Anzeigeeinrichtungen 11 sind in dem Kanal 16, der zu beiden Stirnseiten und zu einer Längsseite hin offen bzw. zugänglich ist, entlang der Längsachse 15 des Grundkörpers 202 aufeinanderfolgend in dem Kanal 16 aufnehmbar bzw. unter Ausbildung einer sich entlang der Längsachse 15 des Grundkörpers 12 erstreckenden Reihe in dem Kanal 16 aufnehmbar bzw. aufeinanderfolgend aufnehmbar. Die Anzeigeeinrichtungen 11 können von der Längsseite her in dem Kanal 16 kraftschlüssig aufgenommen werden bzw. die Anzeigeeinrichtungen 11 können von der Längsseite her in dem Kanal 16 klemmend aufgenommen werden.

Die Stromleiter 21, 22 sind bei dem veranschaulichten Ausführungsbeispielen in dem Kanal 16 angeordnet bzw. vollständig bzw. zur Gänze angeordnet. Jeder Stromleiter 21, 22 ist in Form einer geradlinigen Leiterbahn 21, 22 ausgebildet. Jede Leiterbahn 21, 22 ist auf den Grundkörper 12 aufextrudiert.

Die Stromleiter 21, 22 weisen die Stromleiter-Endabschnitte 24, 26 und die Zwischenabschnitte 29 auf, wobei die jeweiligen Stromleiter-Endabschnitte 24, 26 durch den jeweiligen Zwischenabschnitt 29 miteinander verbunden sind. Der jeweilige Zwischenabschnitt 29 ist in dem Kanal 16 angeordnet und die Stromleiter-Endabschnitte 24, 26 sind in dem jeweiligen Kanal-Endabschnitt 20 angeordnet bzw. vollständig oder zur Gänze angeordnet. Allerdings ist erfindungsgemäß selbstverständlich eine Beschränkung auf ein Anordnung bzw. eine vollständige Anordnung der Stromleiter-Endabschnitte 24, 26 in den Kanal-Endabschnitten 20 nicht vorgesehen. So kann wenigstens einer der Stromleiter-Endabschnitte 24, 26 bei einem alternativen Ausführungsbeispiel auch z.B. mit einem Teilabschnitt 31 außerhalb des Kanals 16 angeordnet sein und mit einem Teilabschnitt 27 in dem Kanal-Endabschnitt 20 angeordnet sein - wie es in Fig. 2 für einen Stromleiter-Endabschnitt 26 schematisch veranschaulicht ist.

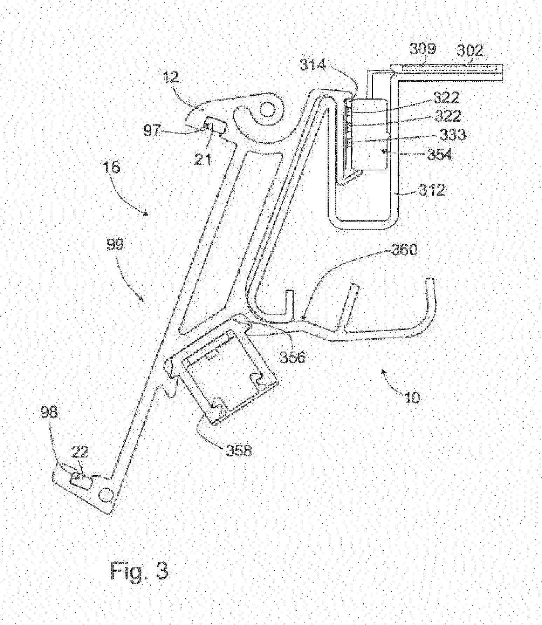

Der Grundkörper 12 nach Fig. 3 eines dritten Ausführungsbeispiels eines erfindungsgemäßen Systems 10 unterscheidet sich von dem Grundkörper 12 nach Fig. 2 insbesondere dadurch, dass der Kanal 16 des extrudierten Grundkörpers 12 drei zusammenhängende Teilbereiche 97, 98 und 99 umfasst, die im Querschnitt rechteckförmig ausgebildet sind. In den jeweils kleineren Teilbereichen 97, 98 ist jeweils ein Stromleiter 21,22 zur Stromversorgung der Anzeigeeinrichtungen angeordnet. Der zweite bzw. weitere Kanal 314 - in dem die Stromschiene 316 angeordnet ist, und welcher zu einer Längsseite des extrudierten Grundkörpers 12 hin offen ist bzw. von einer Längsseite des Grundkörpers 12 zugänglich ist - weist vorteilhaft eine platzsparende kleine Kanaltiefe auf.

Die an die Stromschienen-Leiter 318, 319 anschließbaren Endabschnitte 322 der jeweiligen Stromversorgungsleiter 320, 321 der jeweiligen Signalisierungseinrichtung 309 sind hier in Form von Kontakten 322 eines Anschlusselements 354 ausgebildet. Dementsprechend weist auch der jeweiligen Signalleiter 332 der jeweiligen Signalisierungseinrichtung 309 ein signalübertragendes Kontaktelement 333 zum Anschließen an den Signalleiter 330 der Stromschiene 316 auf, wobei das Kontaktelement 333 an dem Anschlusselement 354 vorgesehen ist.

Der Grundkörper 12 nach Fig. 3 weist ferner einen dritten Kanal 356 auf, in dem eine Langleuchte 358 zum Beleuchten benachbarter Ablagevorrichtungen angebracht und angeordnet ist. Über einen klauenartigen Bereich 360 ist der Grundkörper 12 an die Ablagevorrichtung 312 des Systems 10 anhängbar ausgebildet.

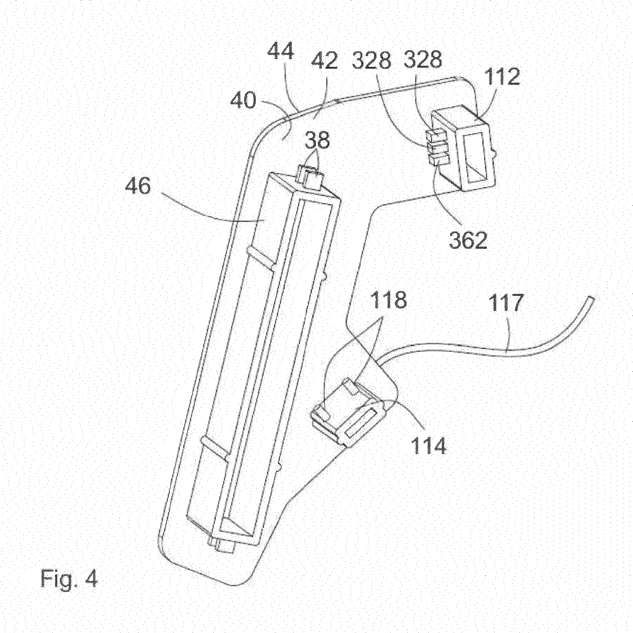

Die Abschlusseinrichtung 14 (vgl. Fig. 4) des Bestromungssystems 352 mit dem Grundkörper 12 nach der Fig. 3 weist einen Flachkörper 40 aus einem Kunststoffmaterial mit zwei entgegengesetzten Seiten 42 und 44 und einen mit der Seite 42 verbundenen Einsteckkörper 46 aus einem Kunststoffmaterial auf. Der Einsteckköper 46 ist zum Verbinden der Abschlusseinrichtung 14 mit einem Endabschnitt 18 des Grundkörpers 12 durch stirnseitiges Einstecken in den Kanal 16 in dem Kanal 16 kraftschlüssig aufnehmbar.. Die mit den jeweiligen Stromleiter-Endabschnitten des Kanals 16 kontaktierbaren Versorgungsleitungs-Endabschnitte 38 sind an dem Einsteckköper 46 vorgesehen, wobei bei diesem Ausführungsbeispiel sowohl der obere als auch der untere Versorgungsleitungs-Endabschnitt 38 jeweils in Form eines Doppel-Kontakts ausgebildet sind.

Die Abschlusseinrichtung 14 nach Fig. 9 weist ferner einen zweiten und einen dritten Einsteckkörper 112, 114 auf. Der zweite Einsteckköper 112 weist zwei Versorgungsleitungs-Endabschnitte 328 in Form von Kontaktierungselementen 328 für die Stromversorgung der Signalisierungseinrichtungen 309 auf, die durch Einstecken des Einsteckkörpers 112 in den Kanal 314 mit jeweiligen Stromschienen-Leitern kontaktierbar sind. Die Kontaktierungselemente 328 selbst sind wiederum jeweils elektrisch leitend mit jeweils einer Leitung verbunden, die abschnittsweise in einer Ummantelung eines Kabel 117 aufgenommen ist, in dem auch die Versorgungsleitungen für die Stromversorgung der Anzeigeeinrichtungen 11 und der Langleuchte 358 abschnittsweise aufgenommen sind. Der zweite Einsteckkörper 112 weist auch eine Anschlusseinrichtung 362 einer Signalübertragungsleitung auf, ebenfalls abschnittsweise in der Ummantelung des Kabels 117 aufgenommen ist

Entsprechendes trifft auch für den dritten Einsteckkörper 114 zu. Der dritte Einsteckköper 114 weist zwei Anschlusselemente 118 für die Spannungsversorgung der Langleuchte 358 auf, die mit nicht dargestellten Versorgungsleitungen der Langleuchte 358, die in dem Kanal 356 angeordnet sind, durch Einstecken des Einsteckkörpers 112 in den Kanal 356 kontaktierbar sind. Die Anschlusselemente 118 selbst sind wiederum jeweils elektrisch leitend mit jeweils einer Leitung verbunden, die abschnittsweise in der Ummantelung des Kabels 117 aufgenommen ist. Sämtliche in der Ummantelung des Kabels 117 abschnittsweise aufgenommenen Versorgungsleitungen können bei einem erfindungsgemäßen Warenpräsentationssystem über jeweilige an wenigstens einem Halteelement vorgesehene Anschlusselemente durch Aufnehmen des Halteelements in der jeweiligen Aufnahme des Haltepfostens bestromt werden, und zwar zur Stromversorgung der Anzeigeeinrichtungen 11, der Signalisierungseinrichtungen 309 und der Langleuchte 358.

Optisch sehr ansprechend ist die jeweilige Stirnseite des Grundkörpers 12 durch stirnseitiges Einstecken des Einsteckkörpers 46 und der Einsteckkörper 112 und 114 in die Kanäle 16, 314 und 356 von dem Flachkörper 40 der Abschlusseinrichtung 14 bedeckbar.

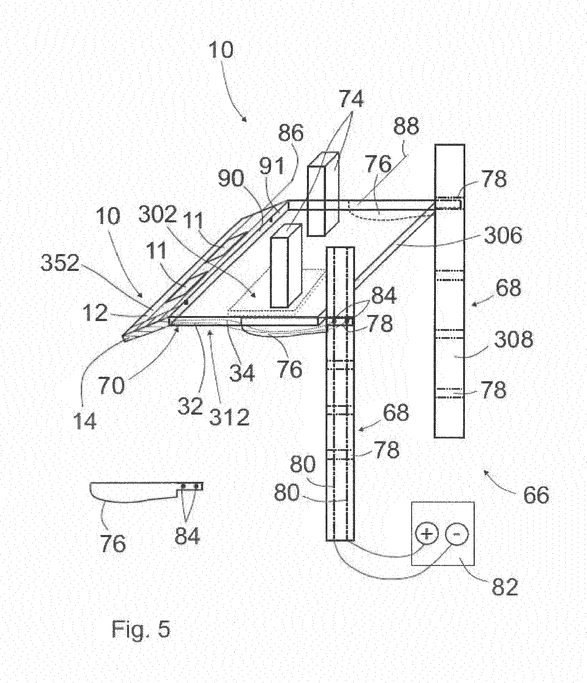

Das Warenpräsentationssystem 66 nach Fig. 5 umfasst ein erfindungsgemäßes System 10 mit der Ablagevorrichtung 312 und einem Warenregal 308 mit zwei Haltepfosten 68, wobei bei alternativen Ausführungsbeispielen selbstverständlich auch eine höhere Anzahl von Haltepfosten und Ablagevorrichtungen vorgesehen sein können.

Die Ablagevorrichtung 312 weist das Ablageelement 306 mit der Ablagefläche 304 und zwei Halteelemente 76 auf.

Die Halteelemente 76 sind mit dem Ablageelement 306 lösbar verbunden, und zwar durch nicht dargestellte Aufnahmen an dem Ablageelement 306, in welche nicht dargestellte Laschen der Halteelemente 76 einführbar sind.

Jeder Haltepfosten 68 weist vier Aufnahme 78 auf, wobei in jeder der Aufnahmen 78 jeweils eines der Halteelemente 76 zum Halten der Ablagevorrichtung 70 an den Haltepfosten 68 aufnehmbar ist. Die Fig. 5 veranschaulicht hierbei schon den Zustand, in welchem die Halteelemente 76 in jeweils einer von zwei gegenüberliegenden Aufnahmen 78 aufgenommen sind, wobei sich eine Aufnahme 78 an dem einen Haltepfosten 68 und die andere Aufnahmen 78 an dem anderen Haltepfosten 68 befindet.

Einer der beiden Haltepfosten 68 weist zwei elektrische Leiter 80 auf, die zum Anschließen an eine Stromquelle 82 vorgesehen sind.

Eines der Haltelemente 76 weist zwei elektrische Anschlusselemente 84 auf, wobei an jedes Anschlusselement 84 jeweils eine der Versorgungsleitungen 32, 34, 324, 326 der Abschlusseinrichtung 14 elektrisch leitend anschließbar ist.

Jedes Anschlusselement 84 ist durch Aufnehmen des Halteelements 76 in der jeweiligen Aufnahme 78 des Haltepfostens 68 mit jeweils einem der Leiter 80 des Haltepfostens 68 elektrisch leitend kontaktierbar.

Der längliche Grundkörper 12 des Systems 10 ist an der Ablagevorrichtung 312 anbringbar, wobei die Fig. 4 schon den angebrachten Zustand veranschaulicht. Das Ablageelement 306 ist länglich ausgebildet und der längliche Grundkörper 12 ist an der Ablagevorrichtung 312 in einer Anordnung anbringbar ist, bei welcher eine sich entlang der Längsachse 86 des Grundkörpers 12 erstreckende Fläche 90 des Grundkörpers 12 einer sich entlang der Längsachse 88 des Ablageelements 306 erstreckenden Fläche 91 des Ablageelements 306 zugewandt ist.

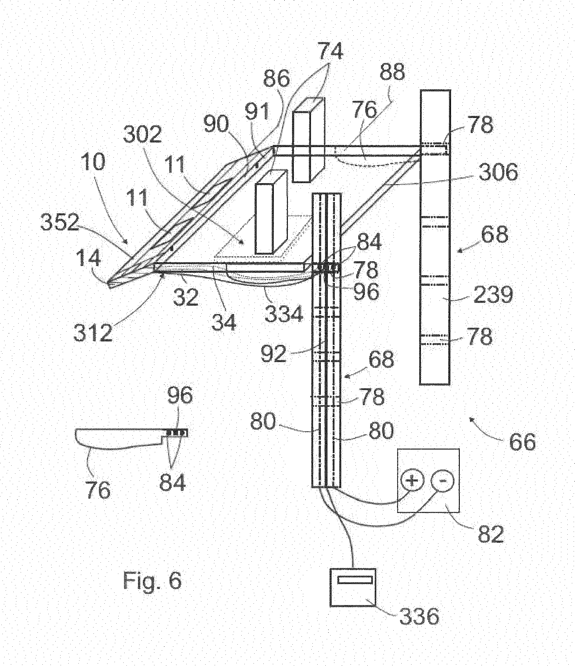

Das Warenpräsentationssystem 66 nach Fig. 6 unterscheidet sich von dem Warenpräsentationssystem 66 nach Fig. 5 dadurch, dass der Haltepfosten 68 zusätzlich eine Signalleitung 92 aufweist, die zum Übertragen von Signalen der Signalisisierungseinrichtung(en) 309 an eine Signalverarbeitungseinrichtung (336) vorgesehen ist. Das Haltelement 76 mit den elektrischen Anschlusselementen 84 weist zusätzlich einen Signalleitungsanschluss 96 auf, wobei an den Signalleitungsanschluss 96 eine Signalübertragungsleitung 334 der Abschlusseinrichtung 14 des Bestromungssystems 352 anschließbar ist. Der Signalleitungsanschluss 96 ist durch Aufnehmen des Halteelements 76 in der Aufnahme 78 des Haltepfostens 68 mit der Signalleitung 92 des Haltepfostens 68 signalübertragbar verbindbar.

### Bezugszeichenliste

10 System
11 Anzeigeeinrichtung
12 Grundkörper
14 Abschlusseinrichtung
15 Längsachse
16 Kanal
17 Einsteckzapfen
18 Endabschnitt
20 Kanal-Endabschnitt
21 Stromleiter
22 Stromleiter
24 Stromleiter-Endabschnitt
26 Stromleiter-Endabschnitt
27 Teilabschnitt
28 Stromversorgungskontakt
29 Zwischenabschnitt
31 Teilabschnitt
32 Versorgungsleitung
34 Versorgungsleitung
36 Stromquelle
38 Versorgungsleitungs-Endabschnitt
40 Flachkörper
42 Seite
44 Seite
46 Einsteckkörper
66 Warenpräsentationssystem
68 Haltepfosten
74 Ware
76 Halteelement
78 Aufnahme
80 Leiter
82 Stromquelle
84 Anschlusselement
86 Längsachse Grundkörper
88 Längsachse Ablageelement
90 Fläche
91 Fläche
92 Signalleitung Haltepfosten
96 Signalleitungsanschluss
97 Teilbereich
98 Teilbereich
99 Teilbereich
112 Einsteckkörper
114 Einsteckkörper
117 Kabel
118 Anschlusselement
300 Einrichtung
302 Flachelement
304 Ablagefläche
305 Ware
306 Ablageelement
308 Warenregal
309 Signalisierungseinrichtung
310 Kraftsensor
312 Ablagevorrichtung
314 weiterer Kanal
316 Stromschiene
318 Stromschiene-Leiter
319 Stromschienen-Leiter
320 Stromversorgungsleiter-Signalisierungseinrichtung
321 Stromversorgungsleiter-Signalisierungseinrichtung
322 Endabschnitt
324 Versorgungsleitung
326 Versorgungsleitung
328 Versorgungsleitungs-Endabschnitt
330 Signalleiter
332 Signalleiter
333 Kontaktelement
334 Signalübertragungsleitung
336 Signalverarbeitungseinrichtung
338 Bereich
344 Messfläche
346 Kunststoffmaterial
348 Rechtecksignal
350 Haltemittel
352 Bestromungssystem
354 Anschlusselement
356 dritter Kanal
358 Langleuchte
360 klauenartiger Bereich
362 Anschlusseinrichtung

## Patentansprüche

1. System (10) umfassend wenigstens eine Einrichtung (300), wenigstens eine Ablagevorrichtung (312) für ein Warenregal (308) und ein Bestromungssystem (352) zur Bestromung mehrerer elektronischer Anzeigeeinrichtungen (11) zur Anzeige von warenbezogenen Informationen,
wobei die Einrichtung (300) ein Flachelement (302) aus einem Kunststoffmaterial zum Anordnen auf einer Ablagefläche (304) eines Ablageelements (306) des Systems für ein Warenregal (308) und wenigstens eine Signalisierungseinrichtung (309) zum Signalisieren einer Gewichtsbelastung wenigstens eines Bereichs des Flachelements (302) durch wenigstens eine auf dem Flachelement angeordnete Ware (305) umfasst,
- wobei die Ablagevorrichtung (312) ein Ablageelement (306) mit einer Ablagefläche (304) aufweist, auf welcher das Flachelement (302) auflegbar ist,
- wobei das Bestromungssystem (352) einen an der Ablagevorrichtung (312) anbringbaren länglichen Grundkörper (12) aus einem Kunststoffmaterial und wenigstens eine Abschlusseinrichtung (14) aufweist,
- wobei der Grundkörper (12) einen sich über die gesamte Länge des Grundkörpers (12) erstreckenden Kanal (16) zur Aufnahme der Anzeigeeinrichtungen (11) aufweist,
- wobei der Grundkörper (12) zwei entgegengesetzte Endabschnitte (18) aufweist, wobei jeder der Endabschnitte (18) einen von zwei entgegengesetzten Kanal-Endabschnitten (20) des Kanals (16) aufweist,
- wobei die Anzeigeeinrichtungen (11) in dem Kanal (16) aufnehmbar sind,
- wobei das Bestromungssystem (352) wenigstens zwei Stromleiter (21, 22) aufweist,
- wobei jeder der Stromleiter (21, 22) zwei Stromleiter-Endabschnitte (24, 26) und einen Zwischenabschnitt (29) aufweist,
- wobei der Zwischenabschnitt (29) jedes Stromleiters (21, 22) in dem Kanal (16) angeordnet ist und von jedem Stromleiter (21,22) jeweils einer der Stromleiter-Endabschnitte (24, 26) in jeweils einem der beiden entgegengesetzten Kanal-Endabschnitte (20) mit wenigstens einem Teilabschnitt (27) angeordnet ist,
- wobei durch Aufnehmen der Anzeigeeinrichtungen (11) in dem Kanal (16) jeweils ein Stromversorgungskontakt (28) jeder Anzeigeeinrichtung (11) mit jeweils einem der Stromleiter (21, 22) elektrisch leitend kontaktierbar ist,
- wobei die Abschlusseinrichtung (14) wenigstens zwei elektrische Versorgungsleitungen (32, 34) aufweist, die zum Herstellen einer Verbindung mit einer Stromquelle (36) vorgesehen sind,
- wobei die Abschlusseinrichtung (14) mit wenigstens einem der beiden entgegengesetzten Endabschnitte (18) des Grundkörpers (12) verbindbar ist,
- wobei durch Verbinden der Abschlusseinrichtung (14) mit dem Endabschnitt (18) des Grundkörpers (12) jeweils ein Versorgungsleitungs-Endabschnitt (38) jeder der Versorgungsleitungen (32, 34) mit jeweils einem Stromleiter-Endabschnitt (24, 26) der Stromleiter-Endabschnitte (24, 26) elektrisch leitend kontaktierbar ist, die in dem Kanal-Endabschnitt (20) des Endabschnitts (18) des Grundkörpers (12) mit wenigstens einem Teilabschnitt (27) angeordnet sind,
- wobei der Grundkörper (12) einen weiteren Kanal (314) aufweist, der sich über die gesamte Länge des Grundkörpers (12) erstreckt, wobei in wenigstens einem Abschnitt des weiteren Kanals (314) eine Stromschiene (316) mit wenigstens zwei sich in Längsrichtung der Stromschiene (316) ersteckenden elektrischen Stromschienen-Leitern (318, 319) angeordnet ist,
- wobei die Signalisisierungseinrichtung (309) wenigstens zwei Stromversorgungsleiter (320, 321) für die Stromversorgung der Signalisisierungseinrichtung (309) aufweist, wobei jeweils ein Endabschnitt (322) jeder der Stromversorgungsleiter (320, 321) an jeweils einen der Stromschienen-Leiter (318, 319) anschließbar ist, wobei der weitere Kanal (314) zu einer Längsseite des Grundkörpers (12) hin offen ist, so dass die Endabschnitte (322) der Stromversorgungsleiter (320, 321) von außerhalb des weiteren Kanals (314) an die Stromschienen-Leiter (318, 319) anschließbar sind,
- wobei die Abschlusseinrichtung (14) wenigstens zwei weitere elektrische Versorgungsleitungen (324, 326) aufweist, wobei durch Verbinden der Abschlusseinrichtung (14) mit dem Endabschnitt (18) des Grundkörpers (12) jeweils ein Versorgungsleitungs-Endabschnitt (328) jeder der weiteren Versorgungsleitungen (324, 326) mit jeweils einem Stromschienen-Leiter (318, 319) der Stromschiene (316) elektrisch leitend kontaktierbar ist.

2. System nach Anspruch 1, **dadurch gekennzeichnet, dass** die Stromschiene (316) wenigstens einen sich in Längsrichtung der Stromschiene (316) ersteckenden Signalleiter (330) zur Weiterleitung von Signalen aufweist,
- wobei die Signalisisierungseinrichtung (309) wenigstens einen Signalleiter (332) zur Weiterleitung von Signalen der Signalisisierungseinrichtung (309) aufweist, wobei der Signalleiter (332) der Signalisisierungseinrichtung (309) an den Signalleiter (330) der Stromschiene (316) anschließbar ist,
- wobei die Abschlusseinrichtung (14) wenigstens eine Signalübertragungsleitung (334) aufweist, die zum Übertragen von Signalen der Signalisisierungseinrichtung (309) an eine Signalverarbeitungseinrichtung (336) vorgesehen ist, wobei durch Verbinden der Abschlusseinrichtung (14) mit dem Endabschnitt (18) des Grundkörpers (12) der Signalleiter (330) der Stromschiene (316) signalübertragend mit der Signalübertragungsleitung (334) der Abschlusseinrichtung (14) verbindbar ist.

3. Warenpräsentationssystem (66) umfassend ein System (10) nach einem der Ansprüche 1 bis 2 und wenigstens ein Warenregal (308) mit wenigstens zwei Haltepfosten (68),
- wobei der Grundkörper (12) des Bestromungssystems an der Ablagevorrichtung (312) anbringbar ist.
- wobei die Ablagevorrichtung (312) das Ablageelement (306) mit der Ablagefläche (304) und zwei Halteelemente (76) aufweist,
- wobei die Halteelemente (76) mit dem Ablageelement (306) verbunden sind,
- wobei jeder Haltepfosten (68) wenigstens eine Aufnahme (78) aufweist, in welche jeweils eines der Halteelemente (76) zum Halten der Ablagevorrichtung (312) an den Haltepfosten (68) aufnehmbar ist,
- wobei wenigstens einer der Haltepfosten (68) wenigstens zwei elektrische Leiter (80) aufweist, die zum Anschließen an eine Stromquelle (82) vorgesehen sind,
- wobei wenigstens eines der Haltelemente (76) wenigstens zwei elektrische Anschlusselemente (84) aufweist, wobei an jedes Anschlusselement (84) jeweils eine der Versorgungsleitungen (32, 34, 324,326) der Abschlusseinrichtung (14) anschließbar ist,
- wobei jedes Anschlusselement (84) durch Aufnehmen des Halteelements (76) in der Aufnahme (78) des Haltepfostens (68) mit jeweils einem der Leiter (80) des Haltepfostens (68) elektrisch leitend kontaktierbar ist.

4. Warenpräsentationssystem (66) nach Anspruch 3, **dadurch gekennzeichnet, dass** das Ablageelement (306) länglich ausgebildet ist, wobei der längliche Grundkörper (12) an der Ablagevorrichtung (312) in einer Anordnung anbringbar ist, bei welcher eine sich entlang der Längsachse (86) des Grundkörpers (12) erstreckende Fläche (90) des Grundkörpers (12) einer sich entlang der Längsachse (88) des Ablageelements (306) erstreckenden Fläche (91) des Ablageelements (306) zugewandt ist.

5. Warenpräsentationssystem (66) nach Anspruch 3 oder 4 umfassend ein System (10) nach Anspruch 2, wobei wenigstens einer der Haltepfosten (68) wenigstens eine Signalleitung (92) aufweist, die zum Übertragen von Signalen der Signalisisierungseinrichtung (309) an eine Signalverarbeitungseinrichtung (336) vorgesehen ist,
- wobei wenigstens eines der Haltelemente (76) wenigstens einen Signalleitungsanschluss (96) aufweist, wobei an den Signalleitungsanschluss (96) die Signalübertragungsleitung (334) der Abschlusseinrichtung (14) anschließbar ist,
- wobei der Signalleitungsanschluss (96) durch Aufnehmen des Halteelements (76) in der Aufnahme (78) des Haltepfostens (68) mit der Signalleitung (92) des Haltepfostens (68) signalübertragbar verbindbar ist.

6. Warenpräsentationssystem (66) nach einem der Ansprüche 3 bis 5, **dadurch gekennzeichnet, dass** die Halteelemente (76) mit dem Ablageelement (306) lösbar verbunden sind.

## Claims

1. System (10) comprising at least one device (300), at least one shelf device (312) for a goods rack (308) and a power supply system (352) for supplying power to a plurality of electronic display devices (11) for displaying goods-related information,
wherein the device (300) comprises a flat element (302) made of a plastic material for arrangement on a shelf surface (304) of a shelf element (306) of the system (10) for a goods rack (308) and at least one signalling device (309) for signalling weight loading of at least one region of the flat element (302) by at least one good (305) arranged on the flat element,
- wherein the shelf device (312) comprises a shelf element (306) having a shelf surface (304) onto which the flat element (302) can be laid,
- wherein the power supply system (352) comprises an elongate base body (12) made of a plastic material attachable to the shelf device (312) and at least one termination device (14),
- wherein the base body (12) comprises a channel (16) extending along the entire length of the base body (12) for receiving the display devices (11),
- wherein the base body (12) comprises two opposed end portions (18), wherein each of the end portions (18) comprises one of two opposed channel end portions (20) of the channel (16),
- wherein the display devices (11) is receivable in the channel (16),
- wherein the power supply system (352) comprises at least two current conductors (21, 22),
- wherein each of the current conductors (21, 22) comprises two current conductor end portions (24, 26) and an intermediate portion (29),
- wherein the intermediate portion (29) of each current conductor (21, 22) is arranged in the channel (16) and one of the current conductor end portions (24, 26) of each current conductor (21, 22) is arranged, in each case, in one of the two opposite channel end portions (20) with at least one partial portion (27),
- wherein, by receiving the display devices (11) in the channel (16), one power supply contact (28) of each display device (11) can be brought into electrically conductive contact with one of the current conductors (21, 22) in each case,
- wherein the termination device (14) comprises at least two electrical supply lines (32, 34) intended to establish a connection with a power source (36),
- wherein the termination device (14) is connectable to at least one of the two opposed end portions (18) of the base body (12),
- wherein, by connecting the termination device (14) to the end portion (18) of the base body (12), one supply line end portion (38) of each of the supply lines (32, 34) can, in each case, be brought into electrically conductive contact with one of the current conductor end portions (24, 26) which are arranged in the channel end portion (20) of the end portion (18) of the base body (12) with at least one partial portion (27),
- wherein the base body (12) comprises a further channel (314) extending along the entire length of the base body (12), wherein a busbar (316) having at least two busbar conductors (318, 319) extending in the longitudinal direction of the busbar (316) is arranged in at least one portion of the further channel (314),
- wherein the signalling device (309) comprises at least two power supply conductors (320, 321) for supplying power to the signalling device (309), wherein one end portion (322) of each of the power supply conductors (320, 321) is connectable, in each case, to one of the busbar conductors (318, 319), wherein the further channel (314) is open towards a longitudinal side of the base body (12) so that the end portions (322) of the power supply conductors (320, 321) are connectable to the busbar conductors (318, 319) from outside the further channel (314),
- wherein the termination device (14) comprises at least two further electrical supply lines (324, 326), wherein, by connecting the termination device (14) to the end portion (18) of the base body (12), one supply line end portion (328) of each of the further supply lines (324, 326) can, in each case, be brought into electrically conductive contact with one busbar conductor (318, 319) of the busbar (316).

2. System according to claim 1, **characterised in that** the busbar (316) comprises at least one signal conductor (330) extending in the longitudinal direction of the busbar (316) for forwarding signals,
- wherein the signalling device (309) comprises at least one signal conductor (332) for forwarding signals from the signalling device (309), wherein the signal conductor (332) of the signalling device (309) is connectable to the signal conductor (330) of the busbar (316),
- wherein the termination device (14) comprises at least one signal transmission line (334) provided for transmitting signals from the signalling device (309) to a signal processing device (336), wherein, by connecting the termination device (14) to the end portion (18) of the base body (12), the signal conductor (330) of the busbar (316) is connectable to the signal transmission line (334) of the termination device (14) so as to transmit signals.

3. Goods presentation system (66) comprising a system (10) according to any one of claims 1 to 2 and at least one goods shelf (308) having at least two retaining posts (68),
- wherein the base body (12) of the power supply system is attachable to the shelf device (312),
- wherein the shelf device (312) comprises the shelf element (306) having the shelf surface (304) and two retaining elements (76),
- wherein the retaining elements (76) are connected to the shelf element (306),
- wherein each retaining post (68) comprises at least one receptacle (78) into which one of the retaining elements (76) for holding the shelf device (312) on the retaining post (68) is receivable in each case,
- wherein at least one of the retaining posts (68) comprises at least two electrical conductors (80) intended for connection to a power source (82),
- wherein at least one of the retaining elements (76) comprises at least two electrical connection elements (84), wherein one of the supply lines (32, 34, 324, 326) of the termination device (14) is connectable to each connection element (84) in each case,
- wherein each connection element (84) can be brought into electrically conductive contact with one of the conductors (80) of the retaining post (68) in each case by receiving the retaining element (76) in the receptacle (78) of the retaining post (68).

4. Goods presentation system (66) according to claim 3, **characterised in that** the shelf member (306) is configured in an elongate form, wherein the elongate base body (12) is attachable to the shelf device (312) in an arrangement in which a surface (90) of the base body (12) extending along the longitudinal axis (86) of the base body (12) faces a surface (91) of the shelf element (306) extending along the longitudinal axis (88) of the shelf element (306).

5. Goods presentation system (66) according to claim 3 or 4, comprising a system (10) according to claim 2, wherein at least one of the retaining posts (68) comprises at least one signal line (92) provided for transmitting signals from the signalling device (309) to a signal processing device (336),
- wherein at least one of the retaining posts (76) comprises at least one signal line connection (96), wherein the signal line (334) of the termination device (14) is connectable to the signal line connection (96),
- wherein the signal line connection (96) is connectable, so as to be able to transmit signals, to the signal line (92) of the retaining post (68) by receiving the retaining element (76) in the receptacle (78) of the retaining post (68).

6. Goods presentation system (66) according to any one of claims 3 to 5, **characterised in that** the retaining elements (76) are detachably connected to the shelf element (306).

## Revendications

1. Système (10) comprenant au moins un appareil (300), au moins un dispositif de dépôt (312) pour une étagère à marchandises (308) et un système d'alimentation électrique (352) pour l'alimentation électrique de plusieurs appareils d'affichage électroniques (11) pour afficher des informations relatives aux marchandises,
l'appareil (300) comprenant un élément plat (302) en une matière plastique destiné à être agencé sur une surface de dépôt (304) d'un élément de dépôt (306) du système (10) pour une étagère de marchandises (308) et au moins un appareil de signalisation (309) pour signaler une charge de poids d'au moins une zone de l'élément plat (302) par au moins une marchandise (305) agencée sur l'élément plat,
- le dispositif de dépôt (312) présentant un élément de dépôt (306) avec une surface de dépôt (304) sur laquelle l'élément plat (302) peut être déposé,
- le système d'alimentation électrique (352) présentant un corps de base (12) allongé en une matière plastique pouvant être disposé sur le dispositif de dépôt (312) et au moins un appareil de terminaison (14),
- le corps de base (12) présentant un canal (16) s'étendant sur toute la longueur du corps de base (12) pour recevoir les appareils d'affichage (11),
- le corps de base (12) présentant deux sections d'extrémité opposées (18), chacune des sections d'extrémité (18) présentant l'une de deux sections d'extrémité de canal opposées (20) du canal (16),
- les appareils d'affichage (11) pouvant être reçus dans le canal (16),
- le système d'alimentation électrique (352) présentant au moins deux conducteurs de courant (21, 22),
- chacun des conducteurs de courant (21, 22) présentant deux sections d'extrémité de conducteur de courant (24, 26) et une section intermédiaire (29),
- la section intermédiaire (29) de chaque conducteur de courant (21, 22) étant agencée dans le canal (16) et l'une des sections d'extrémité de conducteur de courant (24, 26) de chaque conducteur de courant (21, 22) étant agencée respectivement dans l'une des deux sections d'extrémité de canal opposées (20) avec au moins une section partielle (27),
- par réception des appareils d'affichage (11) dans le canal (16), un contact d'alimentation en courant (28) de chaque appareil d'affichage (11) pouvant être mis en contact électriquement conducteur avec respectivement l'un des conducteurs de courant (21, 22),
- l'appareil de terminaison (14) présentant au moins deux lignes d'alimentation électrique (32, 34) qui sont prévues pour établir une liaison avec une source de courant (36),
- l'appareil de terminaison (14) pouvant être relié à au moins l'une des deux sections d'extrémité opposées (18) du corps de base (12),
- par liaison de l'appareil de terminaison (14) à la section d'extrémité (18) du corps de base (12), une section d'extrémité de ligne d'alimentation (38) de chacune des lignes d'alimentation (32, 34) pouvant respectivement être mise en contact électriquement conducteur avec une section d'extrémité de conducteur de courant (24, 26) respective des sections d'extrémité de conducteur de courant (24, 26), qui sont agencées dans la section d'extrémité de canal (20) de la section d'extrémité (18) du corps de base (12) avec au moins une section partielle (27),
- le corps de base (12) présentant un autre canal (314) qui s'étend sur toute la longueur du corps de base (12), une barre conductrice (316) étant agencée dans au moins une section de l'autre canal (314) avec au moins deux conducteurs électriques de barre conductrice (318, 319) s'étendant dans la direction longitudinale de la barre conductrice (316),
- l'appareil de signalisation (309) présentant au moins deux conducteurs d'alimentation en courant (320, 321) pour l'alimentation en courant de l'appareil de signalisation (309), une section d'extrémité (322) de chacun des conducteurs d'alimentation en courant (320, 321) pouvant respectivement être raccordée à l'un respectif des conducteurs de barre conductrice (318, 319), l'autre canal (314) étant ouvert vers un côté longitudinal du corps de base (12), de telle sorte que les sections d'extrémité (322) des conducteurs d'alimentation en courant (320, 321) peuvent être raccordées aux conducteurs de barre conductrice (318, 319) depuis l'extérieur de l'autre canal (314),
- l'appareil de terminaison (14) présentant au moins deux autres lignes d'alimentation électrique (324, 326) ; par liaison de l'appareil de terminaison (14) à la section d'extrémité (18) du corps de base (12), une section d'extrémité de ligne d'alimentation (328) de chacune des autres lignes d'alimentation (324, 326) pouvant respectivement être mise en contact électriquement conducteur avec un conducteur de barre conductrice (318, 319) respectif de la barre conductrice (316).

2. Système selon la revendication 1, **caractérisé en ce que** la barre conductrice (316) présente au moins un conducteur de signaux (330) s'étendant dans la direction longitudinale de la barre conductrice (316) pour la transmission de signaux,
- l'appareil de signalisation (309) présentant au moins un conducteur de signaux (332) pour la transmission de signaux de l'appareil de signalisation (309), le conducteur de signaux (332) de l'appareil de signalisation (309) pouvant être raccordé au conducteur de signaux (330) de la barre conductrice (316),
- l'appareil de terminaison (14) présentant au moins une ligne de transmission de signaux (334), qui est prévue pour la transmission de signaux de l'appareil de signalisation (309) à un appareil de traitement de signaux (336) ; par liaison de l'appareil de terminaison (14) à la section d'extrémité (18) du corps de base (12), le conducteur de signaux (330) de la barre conductrice (316) pouvant être relié à la ligne de transmission de signaux (334) de l'appareil de terminaison (14) en transmettant des signaux.

3. Système de présentation de marchandises (66) comprenant un système (10) selon l'une quelconque des revendications 1 à 2 et au moins une étagère à marchandises (308) avec au moins deux montant de support (68),
- le corps de base (12) du système d'alimentation électrique pouvant être disposé sur le dispositif de dépôt (312),
- le dispositif de dépôt (312) présentant l'élément de dépôt (306) avec la surface de dépôt (304) et deux éléments de support (76),
- les éléments de support (76) étant reliés à l'élément de dépôt (306),
- chaque montant de support (68) présentant au moins un logement (78) dans lequel peut être reçu respectivement l'un des éléments de support (76) pour supporter le dispositif de dépôt (312) sur le montant de support (68),
- au moins l'un des montants de support (68) présentant au moins deux conducteurs électriques (80) qui sont prévus pour être raccordés à une source de courant (82),
- au moins l'un des éléments de support (76) présentant au moins deux éléments de raccordement électriques (84), l'une respective des lignes d'alimentation (32, 34, 324, 326) de l'appareil de terminaison (14) pouvant être raccordée à chaque élément de raccordement (84),
- chaque élément de raccordement (84) pouvant être mis en contact électriquement conducteur avec l'un respectif des conducteurs (80) du montant de support (68) par réception de l'élément de support (76) dans le logement (78) du montant de support (68).

4. Système de présentation de marchandises (66) selon la revendication 3, **caractérisé en ce que** l'élément de dépôt (306) est configuré sous forme allongée, le corps de base allongé (12) pouvant être disposé sur le dispositif de dépôt (312) dans un agencement dans lequel une surface (90) du corps de base (12) s'étendant le long de l'axe longitudinal (86) du corps de base (12) est tournée vers une surface (91) de l'élément de dépôt (306) s'étendant le long de l'axe longitudinal (88) de l'élément de dépôt (306).

5. Système de présentation de marchandises (66) selon la revendication 3 ou 4, comprenant un système (10) selon la revendication 2, dans lequel au moins l'un des montants de support (68) présente au moins une ligne de signalisation (92) prévue pour transmettre des signaux de l'appareil de signalisation (309) à un appareil de traitement de signaux (336),
- au moins l'un des montants de support (76) présentant au moins un raccordement de ligne de signaux (96), la ligne de transmission de signaux (334) de l'appareil de terminaison (14) pouvant être raccordée au raccordement de ligne de signaux (96),
- le raccordement de ligne de signaux (96) pouvant être relié de manière à pouvoir transmettre des signaux à la ligne de signaux (92) du montant de support (68) par réception de l'élément de support (76) dans le logement (78) du montant de support (68).

6. Système de présentation de marchandises (66) selon l'une quelconque des revendications 3 à 5, **caractérisé en ce que** les éléments de support (76) sont reliés de manière amovible à l'élément de dépôt (306).
